(19) Europäisches Patentamt / European Patent Office / Office européen des brevets

(11) **EP 4 222 547 B1**

(12) **FASCICULE DE BREVET EUROPEEN**

(45) Date de publication et mention de la délivrance du brevet:
**18.12.2024 Bulletin 2024/51**

(21) Numéro de dépôt: **21790950.6**

(22) Date de dépôt: **21.09.2021**

(51) Classification Internationale des Brevets (IPC):
**G02B 19/00** (2006.01)  **F24S 23/74** (2018.01)
**H04B 10/116** (2013.01)

(52) Classification Coopérative des Brevets (CPC):
**G02B 19/0028; G02B 19/0076; H04B 10/116**

(86) Numéro de dépôt international:
**PCT/FR2021/051612**

(87) Numéro de publication internationale:
**WO 2022/069815 (07.04.2022 Gazette 2022/14)**

(54) **PROCÉDÉ DE CONCEPTION D'UN CONCENTRATEUR PARABOLIQUE COMPOSÉ EXPANSÉ (CPCE) POUVANT ÊTRE CORRIGÉ POUR COLLECTER LA LUMIÈRE DANS LE CHAMP PROCHE**

**VERFAHREN ZUM ENTWURF EINES KORRIGIERBAREN EXPANDIERTEN VERBINDUNGSPARABOLKONZENTRATORS (EPC) ZUR LICHTSAMMLUNG IM NAHFELD**

**METHOD FOR DESIGNING A CORRECTABLE EXPANDED COMPOUND PARABOLIC CONCENTRATOR (ECPC) FOR COLLECTING LIGHT IN THE NEAR FIELD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2020 FR 2010004**

(43) Date de publication de la demande:
**09.08.2023 Bulletin 2023/32**

(73) Titulaire: **Oledcomm**
**78140 Velizy Villacoublay (FR)**

(72) Inventeurs:
- **VALENCIA-ESTRADA, Juan Camilo**
  **78140 Vélizy-Villacoublay (FR)**
- **ESPINOZA-GARCIA, Alejandro**
  **78370 Plaisir (FR)**

(74) Mandataire: **Bonnet, Michel**
**Cabinet Bonnet**
**93, rue Réaumur**
**75002 Paris (FR)**

(56) Documents cités:
**FR-A1- 2 330 023   FR-A1- 2 893 719**
**US-A- 5 357 101**

EP 4 222 547 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Le Concentrateur Parabolique Composé Expansé est destiné à être intégré dans un dispositif de réception de signaux optiques utilisé pour mettre en oeuvre une communication optique sans fil. L'invention concerne le domaine de la communication optique sans fil.

## ARRIERE PLAN DE L'INVENTION

Un système de communication optique sans fil (ou OWC, pour *Optical Wireless Communication*), par exemple un système de communication LiFi (pour *Light Fidelity*), comprend généralement deux principaux équipements :

- un point d'accès ;
- un terminal utilisateur.

Le point d'accès joue un rôle similaire à celui d'une passerelle WiFi.

Le terminal est par exemple un ordinateur, un *smartphone* ou une tablette. La compatibilité du terminal peut être assurée à l'aide d'un *dongle* qui se branche par exemple sur un port USB du terminal.

En LiFi, un utilisateur peut accéder à un réseau (par exemple à Internet) via son terminal à partir du moment où ledit terminal est connecté à un point d'accès situé à proximité. Une fois cette connexion établie, le point d'accès pourra transmettre les données descendantes du réseau vers le terminal et donc vers l'utilisateur, alors que le terminal pourra faire remonter les données montantes vers le réseau via le point d'accès.

La qualité de cette communication bidirectionnelle (le débit, la latence, la couverture, etc.) dépend en grande partie de la qualité des signaux optiques reçus, par le terminal d'une part et par le point d'accès d'autre part. Cette qualité du signal est généralement évaluée par le rapport signal à bruit (ou SNR pour *Signal-to-Noise Ratio*), qui est le rapport entre la puissance du signal reçu et la puissance du bruit à la réception. Plus la puissance du signal reçu est grande et plus le bruit est faible, plus le SNR est élevé, et donc plus la qualité de la communication est élevée. L'optimisation du SNR est donc critique pour améliorer les performances d'un système de communication optique sans fil, tel qu'un système LiFi. Le document US5357101 divulgue un concentrateur parabolique connu de l'état de la technique.

## OBJET DE L'INVENTION

L'invention a pour objet d'améliorer le rapport signal à bruit d'un équipement de communication optique sans fil.

## RESUME DE L'INVENTION

En vue de la réalisation de ce but, on propose un concentrateur parabolique composé, destiné à être intégré dans un dispositif de réception de signaux optiques utilisé pour mettre en oeuvre une communication optique sans fil, le concentrateur parabolique composé présentant une surface de couplage destinée à être positionnée sur une surface sensible d'un photodétecteur du dispositif de réception, une surface de collecte destinée à recevoir les signaux optiques, et une surface latérale située entre la surface de couplage et la surface de collecte, la surface latérale comprenant deux portions paraboliques inclinées et symétriques lorsqu'elle est vue dans un plan de coupe passant par un axe de référence du concentrateur parabolique composé, la surface latérale étant définie par une équation utilisant des paramètres d'entrée comprenant une dimension de la surface sensible du photodétecteur, un angle d'acceptance, un premier indice de réfraction d'un milieu dans lequel est destiné à être immergé le concentrateur parabolique composé, un deuxième indice de réfraction d'un matériau utilisé pour fabriquer le concentrateur parabolique composé, et un facteur d'expansion diamétral du concentrateur parabolique composé permettant d'augmenter un diamètre global du concentrateur parabolique composé sans augmenter sa hauteur ni modifier la forme des portions paraboliques inclinées et symétriques.

La surface latérale du concentrateur parabolique composé selon l'invention est donc définie à partir de paramètres d'entrée comprenant la dimension de la surface sensible du photodétecteur, l'angle d'acceptance, le premier indice de réfraction, le deuxième indice de réfraction, et le facteur d'expansion diamétral.

Cette manière de concevoir un concentrateur est particulièrement innovante, et le concentrateur parabolique composé selon l'invention possède une taille optimale permettant de concentrer un flux radiant maximal dans le photodétecteur.

On propose de plus un concentrateur parabolique composé tel que précédemment décrit, dans lequel la surface latérale est définie par l'équation suivante :

$$z_l = \frac{\left(d_o\left(\frac{1}{2} + \frac{n_\beta}{n_\alpha \sin\alpha}\right) - \sqrt{\left(r - \frac{sign(r)\Delta d}{2}\right)^2}\right)\sqrt{n_\beta^2 - n_\alpha^2 \sin^2\alpha}}{n_\alpha \sin\alpha}$$

$$-\frac{n_\beta \sqrt{d_o(n_\beta + n_\alpha \sin\alpha)\left(n_\beta d_o - 2n_\alpha \sin\alpha\left(r - \frac{sign(r)\Delta d}{2}\right)^2\right)}}{(n_\alpha \sin\alpha)^2},$$

où $d_o$ est un diamètre de la surface sensible du détecteur, $\alpha$ est l'angle d'acceptance, $n_\alpha$ est le premier indice de réfraction, $n_\beta$ est le deuxième indice de réfraction, et $\Delta d$ est tel que : $\Delta d = d_o(f_e - 1)$,
où $f_e$ est le facteur d'expansion diamétral.

On propose de plus un concentrateur parabolique composé tel que précédemment décrit, le concentrateur parabolique composé étant un concentrateur diélectrique, le premier indice de réfraction $n_\alpha$ et le deuxième indice de réfraction $n_\beta$ étant tels que :

$$1 < n_\alpha < n_\beta \,.$$

On propose de plus un concentrateur parabolique composé tel que précédemment décrit, le concentrateur parabolique composé étant formé par un assemblage d'un concentrateur creux et d'une lentille de collecte comprenant la surface de collecte.
On propose de plus un concentrateur parabolique composé tel que précédemment décrit, dans lequel la surface de collecte est courbe.
On propose de plus un concentrateur parabolique composé tel que précédemment décrit, dans lequel la surface de collecte est définie par l'équation suivante :

$$z_a = z_l(d_i/2) - \frac{cd_i^2}{4 + 2\sqrt{4 - (K+1)c^2 d_i^2}} - \frac{1}{4}\sum_{j=2}^{N} C_{2j}\, d_i^{2j} + \frac{cr^2}{1 + \sqrt{1 - (K+1)c^2 r^2}} + \sum_{j=2}^{N} C_{2j}\, r^{2j} + t_e$$

où :

- $c$ est une courbure au sommet de la surface de collecte ;
- $K$ est une constante conique ;
- les $C_{2j}$ sont des coefficients de déformation asphérique ;
- $d_i$ est un diamètre de la surface de collecte.

On propose de plus un concentrateur parabolique composé tel que précédemment décrit, dans lequel on a :

$$c = -\frac{1}{\left(\frac{n_\beta}{n_\alpha} - 1\right) t_a},$$

$t_a$ étant une distance entre le sommet de la surface de collecte et une source lumineuse avec laquelle est agencée pour communiquer le dispositif de réception de signaux optiques.
On propose de plus un concentrateur parabolique composé tel que précédemment décrit, dans lequel on a :

$$K = -(n_\beta/n_\alpha)^2.$$

On propose de plus un concentrateur parabolique composé tel que précédemment décrit, dans lequel on a :

$$t_e = 0.$$

On propose de plus un concentrateur parabolique composé tel que précédemment décrit, dans lequel $t_e$ est une épaisseur au bord de la lentille de collecte.

On propose de plus un concentrateur parabolique composé tel que précédemment décrit, dans lequel une surface arrière de la lentille de collecte est définie par l'équation suivante :

$$z_b = z_l(d_i/2) - \frac{c'd_i^2}{4 + 2\sqrt{4 - (K'+1)c'^2 d_i^2}} - \frac{1}{4}\sum_{j=2}^{N} C'_{2j} d_i^{2j} + \frac{c'r^2}{1 + \sqrt{1 - (K'+1)c'^2 r^2}} + \sum_{j=2}^{N} C'_{2j} r^{2j}$$

où :

- $c'$ est une courbure au sommet ;
- $K'$ est une constante conique ;
- les $C'_{2j}$ sont des coefficients de déformation asphérique ;
- $z_l(d_i/2) = h$ est une hauteur du concentrateur parabolique composé sans la surface de collecte ;
- $d_i$ est un diamètre de la surface de collecte.

On propose de plus un concentrateur parabolique composé tel que précédemment décrit, comprenant en outre une ou plusieurs couches antireflets ou réfléchissantes appliquées sur la surface latérale.

On propose en outre un dispositif de réception de signaux optiques, comportant au moins un ensemble optique comprenant un photodétecteur et un concentrateur parabolique composé tel que précédemment décrit, dont la surface de couplage est positionnée sur la surface sensible du photodétecteur.

On propose de plus un équipement de communication optique sans fil comprenant un dispositif de réception de signaux optiques tel que précédemment décrit.

On propose de plus un équipement de communication optique sans fil tel que précédemment décrit, l'équipement de communication optique sans fil étant un point d'accès.

On propose de plus un équipement de communication optique sans fil tel que précédemment décrit, l'équipement de communication optique sans fil étant un terminal utilisateur.

On propose en outre un procédé de conception d'un concentrateur parabolique composé tel que précédemment décrit, comportant les phases successives suivantes :

- une première phase comprenant l'étape de définir les paramètres d'entrée ;
- une deuxième phase comprenant l'étape de déterminer, à partir des paramètres d'entrée, des paramètres de sortie comprenant un diamètre optimal de la surface de collecte, une hauteur optimale du concentrateur parabolique composé, une équation pour définir la surface latérale qui utilise les paramètres d'entrée, et un gain du concentrateur parabolique composé, les paramètres de sortie conférant au concentrateur parabolique composé un encombrement optimal permettant de concentrer un flux radiant maximal sur le photodétecteur et d'optimiser son angle d'acceptance ;
- une troisième phase comprenant les étapes de vérifier que l'encombrement optimal du concentrateur parabolique composé est acceptable par rapport à des contraintes d'intégration dans le dispositif de réception, et de valider les paramètres de sortie pour fabriquer le concentrateur parabolique composé si c'est le cas.

On propose en outre un procédé de conception tel que précédemment décrit, comprenant en outre une phase intermédiaire, mise en oeuvre après la deuxième phase et avant la troisième phase, et comprenant l'étape de conférer à la surface de collecte une forme courbe.

On propose en outre un procédé de conception tel que précédemment décrit, dans lequel un concentrateur creux est obtenu à l'issue de la première phase et de la deuxième phase, et dans lequel la troisième phase comprend l'étape de définir une lentille de collecte comprenant la surface de collecte et qui est destinée à être assemblée avec le concentrateur creux pour former le concentrateur parabolique composé.

On propose en outre un procédé de conception tel que précédemment décrit, comprenant en outre une quatrième phase, mise en oeuvre suite à la troisième phase dans le cas où l'encombrement optimal n'est pas acceptable, et comprenant une première étape de correction consistant à modifier le diamètre optimal de la surface de collecte et un diamètre de la surface de couplage du concentrateur parabolique composé mais sans modifier la hauteur optimale du concentrateur parabolique composé ni la forme des portions paraboliques inclinées et symétriques, et/ou une seconde étape de correction consistant à conférer au concentrateur creux une hauteur effective inférieure à la hauteur optimale de manière à obtenir un encombrement acceptable du concentrateur parabolique composé, et une troisième étape consistant à réitérer la deuxième phase et la phase intermédiaire si celles-ci est mise en oeuvre, puis la troisième phase, jusqu'à obtenir un encombrement effectif acceptable du concentrateur parabolique composé.

On propose en outre un procédé de conception tel que précédemment décrit, dans lequel un concentrateur diélectrique est obtenu à l'issue de la première phase et de la deuxième phase

On propose en outre un procédé de conception tel que précédemment décrit, comprenant en outre une quatrième phase, mise en oeuvre suite à la troisième phase dans le cas où l'encombrement optimal n'est pas acceptable, et comprenant une première étape de correction consistant à modifier un diamètre de la surface de collecte et le diamètre optimal de la surface de couplage du concentrateur parabolique composé mais sans modifier la hauteur optimale du concentrateur parabolique composé ni la forme des portions paraboliques inclinées et symétriques, et/ou une seconde étape de correction consistant à conférer au concentrateur diélectrique une hauteur effective inférieure à la hauteur optimale de manière à obtenir un encombrement acceptable du concentrateur parabolique composé et/ou une troisième étape de correction consistant à augmenter le deuxième indice de réfraction et à réitérer la deuxième phase et la phase intermédiaire si celle-ci est mise en oeuvre, puis la troisième phase, jusqu'à obtenir un encombrement acceptable du concentrateur parabolique composé.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

[Fig. 1] la figure 1 est une vue en éclaté d'un point d'accès dans lequel est mise en oeuvre l'invention ;
[Fig. 2] la figure 2 est une vue en perspective d'un concentrateur parabolique composé expansé selon l'invention ;
[Fig. 3] la figure 3 représente, dans un système de coordonnées cylindriques $(r,z)$, une portion de la section méridionale parabolique génératrice de la surface latérale du concentrateur optique ;
[Fig. 4] la figure 4 représente une portion décalée de la section méridionale parabolique génératrice de la surface latérale, ainsi que la surface de couplage du concentrateur optique ;
[Fig. 5] la figure 5 représente un CPC creux sans lentille de collecte ;
[Fig. 6] la figure 6 représente différentes courbes, selon différents angles d'acceptance, d'un gain maximal normalisé ($d_o = 1$) en fonction de la hauteur du CPC creux ;
[Fig. 7] la figure 7 représente un CPCE creux sans lentille additionnelle en guise de surface de collecte ;
[Fig. 8] la figure 8 représente des rayons lumineux dans un concentrateur diélectrique ;
[Fig. 9] la figure 9 représente un CPC diélectrique avec une surface de collecte plane;
[Fig. 10] la figure 10 représente la variation, en fonction de l'indice de réfraction, de la section méridionale optimale d'un CPC diélectrique normalisé ($d_o = 1$), c'est à dire de la section méridionale permettant de concentrer la lumière avec un gain maximum ;
[Fig. 11] la figure 11 représente un CPCE diélectrique avec une surface de collecte plane ;
[Fig. 12] la figure 12 représente en vue de face un CPCE avec une surface de collecte courbe ;
[Fig. 13] la figure 13 représente la surface latérale du concentrateur avant et après l'extension de celui-ci par un agrandissement.

DESCRIPTION DETAILLEE DE L'INVENTION

L'invention est mise en oeuvre dans un équipement de communication optique sans fil appartenant à un système de communication optique sans fil.

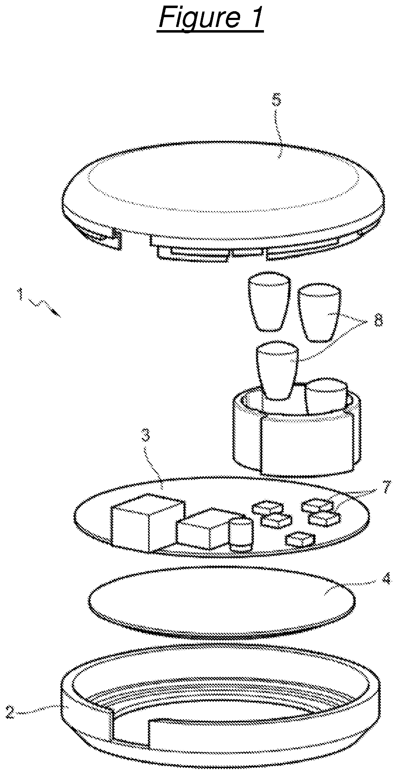

En référence à la figure 1, l'équipement est ici un point d'accès 1. La communication optique sans fil est par exemple une communication LiFi.

Le point d'accès 1 comporte un boîtier 2 à l'intérieur duquel est intégrée une carte électrique 3 qui repose sur un support 4 positionné au fond du boîtier 2. Un couvercle 5 permet de fermer le boîtier 2.

La carte électrique 3 comprend un certain nombre de composants électriques et optoélectroniques.

Certains de ces composants permettent de mettre en oeuvre un dispositif de réception de signaux optiques. Les signaux optiques reçus sont émis par le terminal d'un utilisateur et transportent des données montantes.

Certains de ces composants permettent de mettre en oeuvre un dispositif d'émission de signaux optiques. Les signaux optiques émis sont reçus par le terminal de l'utilisateur et transportent des données descendantes.

Le dispositif de réception comporte une pluralité de photodétecteurs, qui sont ici des photodiodes 7. Les photodétecteurs pourraient être de type différent, et comporter par exemple un ou plusieurs phototransistors (PT), une ou plusieurs photorésistances (PR), une ou plusieurs photodiodes PIN, une ou plusieurs photodiodes à avalanche, une ou plusieurs SPAD (pour *Single Photon Avalanche Diode*), un ou plusieurs capteurs CMOS (pour *Complementary Metal Oxide Semiconductor*), etc.

Chaque photodiode 7 est associée à un concentrateur parabolique composé (CPC) selon l'invention 8, qui est positionné sur ladite photodiode 7.

Le CPC 8 est un CPC de type nouveau, que l'on nommera ici CPCE, pour « Concentrateur Parabolique Composé Expansé ».

Il est connu que la lumière transporte intrinsèquement de l'énergie, mais qu'elle peut aussi être modulée pour transmettre un signal. Un élément optique capable de recueillir la lumière est appelé concentrateur. On suppose pour commencer qu'une source radiative est située à l'infini de telle sorte que sa lumière peut être assimilée à des rayons lumineux parallèles. Ces rayons lumineux entrent par la surface d'entrée du concentrateur et sont dirigés vers la surface de sortie qui peut être en contact avec un transducteur d'énergie ou un détecteur photoélectrique. Ici, comme on vient de le voir, la surface de sortie est en contact avec une photodiode 7. Cette hypothèse de rayons incidents parallèles est le principe physique qui sous-tend les méthodes usuelles de conception des CPCs. Toutefois, la lumière incidente sur le CPC provient en réalité d'un objet proche si bien que les rayons lumineux incidents ne sont pas parallèles. Nous considérons donc ici qu'un CPC doit avoir comme caractéristique fondamentale une surface d'entrée dont la forme permet aux rayons incidents qui la traversent de devenir aussi parallèles que possible. Cette surface d'entrée particulière est une différence optionnelle entre un CPC usuel et un CPCE selon l'invention.

On parle ici de surface de collecte pour la surface d'entrée et de surface de couplage pour la surface de sortie.

Le concentrateur optique dont il est ici question est un concentrateur parabolique composé qui a une génératrice parabolique externe définie pour collecter la lumière sur la photodiode. Ici, le mot « composé » fait référence au fait que le concentrateur réalise plusieurs fonctions optiques mises en oeuvre en parallèle.

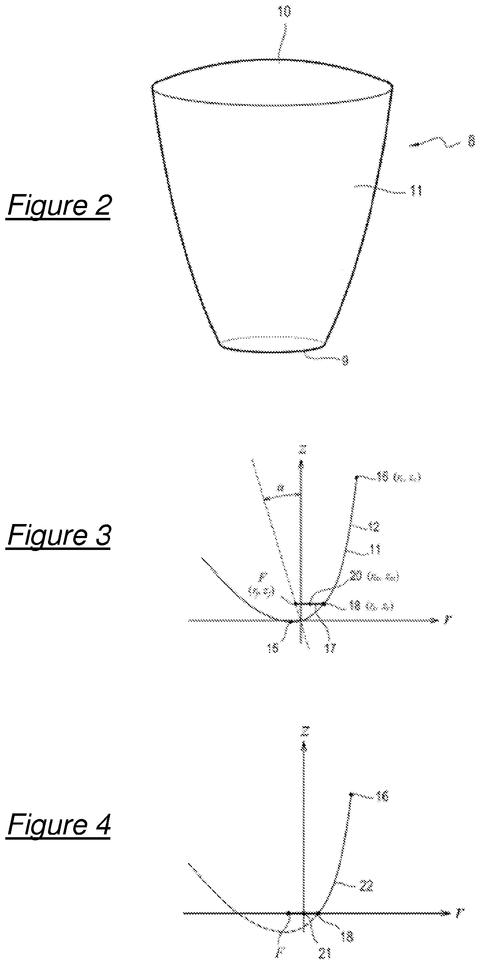

En référence à la figure 2, le CPCE 8 présente donc une surface de couplage 9, une surface de collecte 10 des rayons lumineux, et une surface latérale 11 située entre la surface de collecte 10 et la surface de couplage 9. La surface de couplage 9 est une surface plane de contour circulaire (mais pourrait être une surface de contour différent, par exemple carré, rectangulaire, etc.) alors que la surface de collecte 10 est ici une surface sphérique ou asphérique, continue ou lenticulaire (de type Fresnel) qui transforme un CPCE en un concentrateur optique corrigé en champ proche, sans aberration sphérique. Cette forme de surface de collecte permet de capturer plus efficacement la lumière lorsqu'elle provient d'un émetteur proche.

On notera qu'une surface de collecte plane est un cas limite de surface asphérique.

La surface de couplage 9 est destinée à être positionnée sur une surface sensible de la photodiode 7, qui présente ici une forme rectangulaire (mais qui pourrait présenter une forme différente, par exemple carrée ou circulaire). La surface latérale 11 est ici une surface de révolution avec une génératrice parabolique.

Le but du CPCE 8 est de focaliser l'ensemble des rayons lumineux incidents à la surface de collecte 10 jusqu'à un certain angle, qui est l'angle d'acceptance, vers la surface de couplage 9 afin que ces rayons lumineux soient captés par la photodiode 7. Pour cela, le CPCE 8 utilise le principe de réflexion totale interne selon lequel des rayons lumineux incidents avec un angle trop élevé pour être focalisés directement vers la surface de couplage 9 seront réfléchis par la surface latérale 11 à une ou plusieurs reprises afin d'aboutir sur la surface de couplage 9.

Les concentrateurs optiques sont classés comme des éléments optiques non imageants (ou anidoliques). Les concentrateurs optiques facilitent le transfert du rayonnement lumineux entre une source de lumière et un détecteur cible. Contrairement aux systèmes optiques d'imagerie, les concentrateurs optiques ne sont pas conçus pour former des images mais pour produire un transfert optimal du rayonnement.

Les CPCs ont d'abord été conçus pour des applications de concentration de la lumière solaire. Leur intérêt ne repose donc pas sur l'imagerie d'un objet mais sur le transfert d'énergie. Par conséquent, ce ne sont pas les points individuels de l'objet qui présentent un intérêt, mais plutôt ses limites. En d'autres termes, dans l'optique d'imagerie, chaque point individuel appartenant à un objet doit être restitué dans le plan de l'image. Cependant, dans l'optique non imageante, les rayons des points d'objet délimités peuvent arriver brouillés dans le plan conjugué. L'optique non imageante a été redéfinie en termes de comportement thermique inhérent à la source de l'objet. Les concentrateurs non imageants servent au transfert d'énergie d'une source rayonnante vers une cible. La cible peut être un élément photovoltaïque ou un photodétecteur (ici, la cible est une photodiode). D'un point de vue thermodynamique, il a été proposé dans l'art antérieur d'examiner la concentration à des échelles géométriques et probabilistes.

D'un point de vue optique géométrique, il est crucial d'établir le rapport de concentration maximum d'un concentrateur dont l'ouverture ou la surface d'absorption sont prédéfinies.

Le procédé de conception est une méthode totalement nouvelle et particulièrement innovante pour concevoir et déterminer la géométrie d'un CPC.

Ici, le CPCE 8 est réinterprété non pas comme un élément radiatif - même s'il reste une source radiative - mais comme un émetteur de signaux.

Le CPCE peut comprendre un concentrateur creux, qui est un CPC creux, assemblé avec une lentille de collecte sur laquelle est définie la surface de collecte, qui est une surface plane ou courbe.

Le CPCE peut aussi être un concentrateur diélectrique et monobloc, dont la surface de collecte 10 est une surface plane ou courbe.

Le dimensionnement de la surface de couplage 9, de la surface de collecte 10 et de la surface latérale 11 est critique et doit respecter plusieurs contraintes.

La surface de couplage 9 doit être adaptée à la surface sensible de la photodiode 7. La surface de collecte 10 doit être la plus grande possible pour optimiser le nombre de rayons lumineux incidents susceptibles d'être focalisés vers la surface de couplage 9. Toutefois, pour une surface de couplage 9 fixe, plus la surface de collecte 10 est grande et plus le concentrateur optique 8 sera haut. Par ailleurs, une grande surface de collecte 10 ne facilite pas l'intégration dans un espace restreint. La surface latérale 11 doit être conçue de manière à relier la surface de collecte 10 et la surface de couplage 9 en maximisant la lumière qui atteint le photodétecteur.

Le procédé de conception permettant de produire le CPCE diffère fondamentalement des méthodes de l'art antérieur, dans lesquelles le CPC est conçu en fixant au préalable le diamètre de la surface de collecte, en essayant d'obtenir un gain maximum pour un indice de réfraction préétabli, et en élargissant le diamètre pour obtenir un flux radiant maximal.

Le procédé de conception utilisé ici comprend une pluralité de phases distinctes, mises en oeuvre l'une après l'autre et dans cet ordre : une première phase, une deuxième phase, une phase intermédiaire, une troisième phase et une quatrième phase. Comme on le verra, la phase intermédiaire est optionnelle.

Le but de ces phases est de dimensionner le CPCE 8 préalablement à sa fabrication.

La première phase consiste à définir des paramètres d'entrée à partir desquels vont être définies toutes les dimensions et caractéristiques les plus critiques du CPCE 8.

Les paramètres d'entrée comprennent un angle d'acceptance du concentrateur 8, ainsi qu'un diamètre de la surface de couplage 9 et un facteur d'expansion diamétral. Le facteur d'expansion diamétral du concentrateur parabolique composé permet d'augmenter un diamètre global du CPCE sans augmenter sa hauteur ni modifier la forme des portions paraboliques inclinées et symétriques qui définissent sa surface latérale. Par « diamètre global », on entend le diamètre du CPCE sur toute sa hauteur.

Les paramètres d'entrée comprennent aussi un premier indice de réfraction d'un milieu dans lequel est destiné à être immergé le CPCE, et un deuxième indice de réfraction d'un matériau utilisé pour fabriquer le CPCE. Le deuxième indice de réfraction doit être fixé à la valeur la plus haute possible, selon les contraintes de disponibilité, de prix et de transmissibilité des matériaux.

Le diamètre initial de la surface de couplage 9 est défini à partir d'au moins une dimension de la surface sensible de la photodiode 7. Ce point est fondamental : la donnée d'entrée n'est pas le dimensionnement de la surface de collecte 10, mais le dimensionnement de la surface de couplage 9, qui est obtenu à partir des dimensions de la surface sensible de la photodiode 7 qui sera effectivement utilisée dans le point d'accès 1.

La dimension de la surface sensible de la photodiode 7 est ici la longueur de sa diagonale : le diamètre de la surface de couplage 9 du CPCE 8 est égal à la longueur de la diagonale de la surface sensible de la photodiode 7.

On a donc $d_0 = \sqrt{a^2 + b^2}$, où $d_0$ est le diamètre de la surface de couplage 9, $a$ est la longueur et $b$ est la largeur de la surface sensible de la photodiode 7.

On note que si la surface sensible de la photodiode avait pour forme un carré, le diamètre de la surface de couplage 9 du CPCE 8 pourrait aussi être égal à la longueur de la diagonale du carré. Si la surface sensible de la photodiode avait une forme circulaire (ou elliptique), le diamètre de la surface de couplage 9 du CPCE 8 pourrait être égal au diamètre maximum de la surface sensible.

L'angle d'acceptance est ici un angle $\alpha$.

Comme on l'a vu, le CPCE 8 peut comprendre un concentrateur creux (ou réfléchissant), ou bien être un concentrateur diélectrique (ou réfractif) et monobloc. Le concentrateur creux se compose uniquement d'une surface latérale 11. Sa surface de collecte 10 et sa surface de couplage 9 sont en fait des ouvertures. Un concentrateur diélectrique est quant à lui plein et comprend donc bien une surface latérale 11, une surface de collecte 10 et une surface de couplage 9.

Puis, la deuxième phase comprend l'étape de déterminer, à partir des paramètres d'entrée, des paramètres de sortie comprenant dans une première étape un diamètre optimal de la surface de collecte 10, une hauteur optimale du CPCE 8, une équation de la surface latérale 11 du CPCE 8, et un gain maximal du CPCE 8. A l'issue de cette première étape, la surface de collecte est une surface plane.

La deuxième phase comprend ensuite une deuxième étape qui a pour but d'augmenter l'angle maximal de communication du concentrateur optique 8. C'est dans cette deuxième étape que le CPC est converti en CPCE, c'est-à-dire en CPC au diamètre global expansé. L'angle d'acceptance est un angle de conception qui correspond à l'angle maximal auquel des rayons pourront être insérés dans le concentrateur optique. L'angle d'acceptance est différent de l'angle maximal de communication, qui est l'angle maximal qui permet d'assurer une communication optique sans fil (ici une communication LiFi). L'angle maximal de communication est en réalité plus faible que l'angle d'acceptance. Cela s'explique par le fait que, pour un angle d'incidence supérieur à l'angle maximal de communication, la puissance optique focalisée sur le concentrateur optique sera trop faible, et donc le SNR trop faible pour que le lien de communication optique sans fil soit fonctionnel. La puissance optique reçue est insuffisante. L'angle de communication maximal augmente à mesure que le diamètre du concentrateur est expansé, ce qui augmente le diamètre de la surface de capture sans modifier la hauteur et la géométrie parabolique de la section méridionale. La valeur maximale de flux radiant focalisé est atteinte lorsque l'expansion diamétrale est égale à $d_o$ ($f_e = 2$).

La phase intermédiaire (qui est optionnelle) comprend l'étape de transformer la surface de collecte plane 10 en une surface courbe. Dans le cas où le CPCE selon l'invention comprend un concentrateur creux, qui a une ouverture au niveau de la surface de collecte 10, cette transformation de surface n'est pas directement possible. On assemble alors une lentille de collecte, dont la surface suit l'équation obtenue durant cette phase intermédiaire, avec le concentrateur creux pour le refermer et ajouter une surface de collecte 10 courbe. Dans le cas où le concentrateur optique selon l'invention est un concentrateur diélectrique, la surface de collecte 10 initialement plane à l'issue de la deuxième phase est transformée en une surface de collecte 10 courbe selon l'équation obtenue durant cette première phase intermédiaire phase.

Dans cette configuration optimale, le CPCE 8 présente un gain maximal et ses performances optiques sont optimisées.

On décrit maintenant plus en détail la deuxième phase et la phase intermédiaire.

Durant la deuxième phase, les paramètres de sortie sont définis dans une première étape de la manière suivante.

Pour concevoir la surface latérale 11 du CPCE 8, on considère tout d'abord, en référence aux figures 3 et 4, un miroir parabolique dont le sommet est situé à l'origine des coordonnées dans un système de coordonnées cylindriques (r,z).

Le miroir parabolique a pour équation :

$$(1) : z = \frac{r^2}{4f},$$

où $f > 0$ est la distance focale et où le point focal $F$ a pour coordonnées $(0,f)$. Le miroir parabolique 11 nécessite une inclinaison dans sa section méridionale $(r,z)$.

La section méridionale d'un solide est la section du solide qui passe par son axe de référence. Sur les figures 3 et 4, cet axe de référence est l'axe $z$, qui est l'axe de rotation du CPCE 8.

On parle de section méridionale « parabolique », car la surface latérale 11 est définie par une portion de parabole, qui est la génératrice de la révolution. Lorsqu'une coupe méridionale est effectuée, deux portions paraboliques sont obtenues, symétriques par rapport à l'axe $z$.

On transforme l'équation (1) en coordonnées polaires $(R, \theta)$ en utilisant les changements de variables suivants :

$$(2) : \{r \to R \cos \theta\}, \{z \to R \sin \theta\}.$$

On obtient l'équation implicite du second degré suivante :

$$(3) : R \sin \theta = \frac{(R \cos \theta)^2}{4f},$$

dont la solution explicite est :

$$(4) : R = 4f \sec \theta \tan \theta.$$

Le processus d'inclinaison nécessite l'addition ou la soustraction d'un angle qui correspond à l'angle d'acceptance $\alpha$ du concentrateur optique. En faisant tourner la parabole autour de son sommet d'un angle $\alpha$, le rayon polaire correspondant est :

$$(5) : R = 4f \sec(\theta - \alpha)\tan(\theta - \alpha).$$

Sur la figure 3, le point focal après rotation $F$ peut être observé.

On note que la figure 3 a été construite en utilisant une parabole dont la distance focale est f = 3,194 mm, avec un angle de rotation $\alpha$ = 16,1 degrés.

Les coordonnées du point focal après rotation $F$ sont :

$$(6) : \left(r_f, z_f\right) = (-f \sin\alpha, f \cos\alpha).$$

Une transformation de coordonnées inverses permet de trouver l'équation de la parabole inclinée en coordonnées cylindriques. On utilise le changement de variables et de fonctions suivant :

$$(7) : \left\{ R \to \sqrt{r^2 + z^2} \right\}, \left\{ \cos\theta \to \frac{r}{\sqrt{r^2+z^2}} \right\}, \left\{ \sin\theta \to \frac{z}{\sqrt{r^2+z^2}} \right\}.$$

En substituant ce changement dans la racine $R = 4f \sec(\theta - \alpha)\tan(\theta - \alpha)$ et en simplifiant, on obtient la représentation implicite de la parabole inclinée en coordonnées cylindriques :

$$(8) : 1 = 4f \frac{z \cos\alpha - r \sin\alpha}{(r \cos\alpha + r \sin\alpha)^2}.$$

En résolvant cette équation selon la variable $z$, on obtient deux solutions réelles. Ces solutions décrivent une fonction par morceaux pour la section méridionale de la parabole inclinée.

L'équation suivante représente la courbe recherchée 12 :

$$(9) : z = -\cot\alpha \, (r - 2f \csc\alpha) - \sqrt{2} \csc^2\alpha \sqrt{f(f + f \cos 2\alpha - 2r \sin\alpha)}.$$

On détermine le sommet 15 représenté sur la figure 3. Les coordonnées cartésiennes $(r_c, z_c)$ du point critique 16 où la discontinuité apparaît sont trouvées lorsque le noyau de la racine dans l'équation (7) disparaît. Le discriminant de cette équation :

$$(10) : f(f + f \cos 2\alpha - 2r_c \sin\alpha) = 0,$$

permet de trouver le rayon du cylindre critique, qui correspond à l'abscisse supérieure de la section située dans le premier quadrant $\{r_c \to f \cos\alpha \cot\alpha\}$.

En utilisant cette expression du rayon du cylindre critique dans l'équation (4), on obtient les coordonnées du point critique 16 :

$$(11) : (r_c, z_c) = \left(f \cos\alpha \cot\alpha, f(\cos\alpha + \csc\alpha \cot\alpha)\right).$$

Il convient de souligner qu'au point critique 16, la ligne de tangente à la courbe méridionale a une pente infinie. On construit une ligne droite 17 qui passe par le foyer $F$ et qui est parallèle à l'axe $r$ de la section méridionale, comme le montre la figure 3. En assimilant l'équation (11) à $z_f$ dans l'équation (6), il est possible d'obtenir l'abscisse du point d'intersection 18 $(r_s, z_s)$ de la ligne droite 17 et de la surface latérale 11 :

$$(12) : -\cot\alpha \, (r_s - 2f \csc\alpha) - \sqrt{2} \csc^2\alpha \sqrt{f(f + f \cos 2\alpha - 2r_s \sin\alpha)} = f \cos\alpha,$$

en ayant une solution positive pour $r_s$ :

$$(13) : \{r_s \to 2f\sec^2\alpha - f(\sin\alpha + 2\sec\alpha\tan\alpha)\}.$$

Les coordonnés du point d'intersection 18 sont ainsi réduites à :

$$(14) : (r_s, z_s) = (2f\sec^2\alpha - f(\sin\alpha + 2\sec\alpha\tan\alpha), f\cos\alpha).$$

Ainsi, on peut calculer le diamètre $d_0$ de l'ouverture de sortie du concentrateur optique, qui correspond à la distance entre le point focal $F$ et le point d'intersection 18.

On a :

$$(15) : d_0 = \left(r_s - r_f\right),$$

avec

$$(16) : \{r_s \to 2f\sec^2\alpha - f(\sin\alpha + 2\sec\alpha\tan\alpha), r_f \to -f\sin\alpha\},$$

qui une fois évalué et simplifié, devient :

$$(17) : d_0 = 2f\sec\alpha\,(\sec\alpha - \tan\alpha).$$

Il est maintenant possible de déterminer les coordonnées $(r_m, z_m)$ du point milieu 20 de l'ouverture de sortie selon :

$$(18) : (r_m, z_m) = \left(r_f + d_o/2, z_f\right),$$

qui, après évaluation avec : $\{r_f \to -f\sin\alpha, d_o \to 2f(\sec\alpha - \tan\alpha)\sec\alpha\}$ et $\{z_f \to f\cos\alpha\}$, puis simplification, se réduit à :

$$(19) : (r_m, z_m) = (f(\sec^2\alpha - \sin\alpha - \sec\alpha\tan\alpha), f\cos\alpha).$$

Les coordonnées du point milieu 20 permettent de définir la parabole après rotation en utilisant $\{\{r \to r + r_m\}, \{z \to z + z_m\}\}$ et l'équation (9). De cette manière, le point milieu 20 $(r_m, z_m)$ et le point origine 21 des coordonnées du concentrateur optique 8 coïncident, comme cela est visible sur la figure 4. On obtient donc l'équation qui suit pour la parabole :

$$(20) : z = -\cot\alpha(r + r_m - 2f\csc\alpha) - \frac{\sqrt{2f(f + f\cos(2\alpha) - 2(r + r_m)\sin\alpha)}}{\sin^2\alpha} - z_m.$$

Le profil latéral 22 du premier quadrant est obtenu après évaluation et simplification de l'équation (20) :

$$(21) : z = -(r - 2f\csc\alpha)\cot\alpha + f(1 - \csc\alpha)\sec\alpha - 2\frac{\sqrt{f\left(\dfrac{f}{1 + \sin\alpha} - r\sin\alpha\right)}}{\sin^2\alpha}.$$

Néanmoins, pour construire une surface de révolution latérale, la fonction impaire de l'équation (21) doit être transformée en fonction paire en effectuant le changement suivant de variables $\{\{r \to \sqrt{r^2}\}, \{z \to z_l\}\}$ , ce qui donne :

$$(22) : z_l = -\left(\sqrt{r^2} - 2f \csc \alpha\right) \cot \alpha + f(1 - \csc \alpha) \sec \alpha - 2 \frac{\sqrt{f\left(\frac{f}{1+\sin \alpha} - \sqrt{r^2}\sin \alpha\right)}}{\sin^2 \alpha}.$$

Il est maintenant possible de trouver les nouvelles coordonnées de tous les points essentiels décrits dans la démonstration et visibles sur la figure 3 :

a) Le point critique 16 de la pente maximale :

$$(23) : (r_c, z_c) = \left(\frac{f \csc \alpha}{1 + \sin \alpha}, f \csc \alpha \cot \alpha\right);$$

b) Le point focal *F* :

$$(24) : \left(r_f, z_f\right) = (-f \sin \alpha - r_m, f \cos \alpha - z_m) = (f \sec \alpha (\tan \alpha - \sec \alpha), 0) ;$$

c) Le point d'intersection 18 :

$$(25) : (r_s, z_s) = (f(\sec \alpha - \tan \alpha) \sec \alpha , 0).$$

On vérifie donc que le point focal *F* et le point d'intersection 18 sont des points symétriques.

Il est important de mentionner que la hauteur maximale du concentrateur correspond à l'ordonnée du point 16, c'est-à-dire à :

$$(26) : h_{max} = f \cot \alpha \csc \alpha .$$

On se place tout d'abord dans le cas où le CPCE comprend un concentrateur creux.

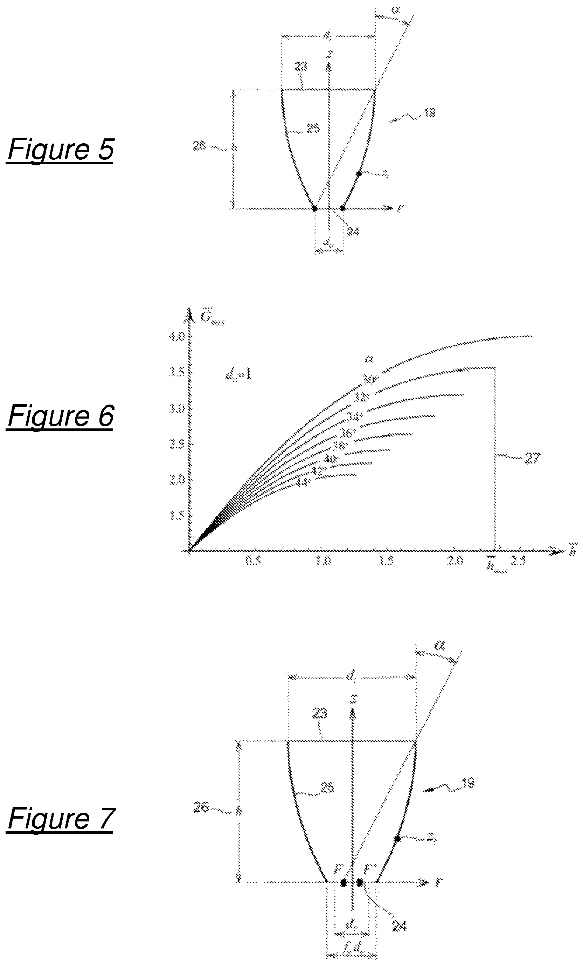

La figure 5 montre un concentrateur creux de révolution 19. Il est constitué d'un miroir concave ayant une ouverture d'entrée 23 de diamètre $d_i$ qui recueille la lumière émise par une source radiante située à l'infini. L'ouverture d'entrée 23 correspond à la surface de collecte.

Le concentrateur creux 19 conduit la lumière entrant par l'ouverture d'entrée 23 dans l'ouverture de sortie 24 de diamètre $d_o$. L'ouverture de sortie 24 correspond à la surface de couplage.

Ce système optique, bien connu dans l'état de l'art de la technique habituelle, est constitué de deux sous-systèmes optiques indépendants qui collectent la lumière en parallèle : un premier sous-système qui reçoit la lumière à travers son ouverture de sortie 24, et un second sous-système qui réfléchit la lumière incidente dans le miroir interne latéral 25 sur l'ouverture de sortie 24. De ce fait, ce type de système optique est appelé système optique composé.

On utilise deux variables pour concevoir le concentrateur creux 19 (qui sont les paramètres d'entrée) : le diamètre $d_o$ de l'ouverture de sortie 24 (c'est-à-dire le diamètre de la surface de couplage 9 - en supposant un concentrateur à symétrie de rotation), et le champ d'acceptance semi-angulaire noté $\alpha$ (c'est l'angle d'acceptance).

Ces paramètres d'entrée permettent de trouver le diamètre $d_i$ de l'ouverture d'entrée, la hauteur 26 du concentrateur creux 19 avec la dimension *h*, et la géométrie du miroir 25 incluant la surface latérale $z_l$.

Précédemment, la formulation de base pour la parabole après rotation a été déduite en fonction de deux paramètres seulement : l'angle d'acceptance $\alpha$ et la distance focale *f*. Ces formulations nous permettent de déduire dans ce qui suit les expressions nécessaires pour concevoir le CPC creux 19 en fonction de $d_o$ et de $\alpha$.

A partir de l'équation (17), nous pouvons résoudre *f* en fonction de $d_o$ et de $\alpha$:

$$(27) : f = \frac{d_o(1+\sin \alpha)}{2}.$$

Cette expression de *f* est alors utilisée dans l'équation (22) pour exprimer la surface latérale en fonction de $d_o$ et $\alpha$, comme indiqué par :

$$(28): z_l = \cot\alpha\left(\frac{d_o}{2} + d_o\csc\alpha - \sqrt{r^2}\right) - \frac{\sqrt{d_o(1+\sin\alpha)(d_o - 2\sqrt{r^2}\sin\alpha)}}{\sin^2\alpha}.$$

L'ouverture d'entrée 23 de diamètre $d_i$ doit remplir la condition $0 < d_i \leq d_{imax}$. La limite supérieure de l'intervalle est obtenue avec les équations (23) et (27). Ainsi, le diamètre maximal de l'ouverture d'entrée 23 est :

$$(29): d_{imax} = d_0\csc\alpha.$$

Ce diamètre maximal est aussi le diamètre optimal de la surface de collecte.

La hauteur maximale 26 du concentrateur creux 19 est alors calculée en substituant l'équation (27) à l'équation (26) :

$$(30): h_{max} = \frac{d_0\cos\alpha(1+\sin\alpha)}{2\sin^2\alpha}.$$

Le calcul de la hauteur optimale $h$ du CPC creux avec la condition $\{0 < h \leq h_{max}]$ nécessite de comprendre sa fonction optique comme une fonction de son gain optique $G$. Supposons que la lumière émergeant d'une source radiative située à l'infini arrive collimatée dans un CPC et que tout le rayonnement frappant la surface de collecte est collecté dans la surface de sortie de couplage. Supposons donc que l'efficacité soit de 100%. Alors, le gain maximal est $G_{max} = E_o/E_i$, où $E_o$ est l'irradiance de l'ouverture de sortie (densité de flux radiant, en [Watts/m2]), et $E_i$ est l'irradiance sur l'ouverture d'entrée.

Si les puissances en sortie et en entrée sont respectivement $W_o$ et $W_i$, et que les deux sont égales, le gain est réduit à :

$$(31): G_{max} = \left(\frac{d_i}{d_o}\right)^2.$$

Le gain est le rapport entre la superficie de la surface de collecte $A_i$ et celle de la surface de couplage $A_o$. Il existe une dépendance entre la superficie de la surface de collecte $A_i$ et la hauteur $h$ du CPC creux. En évaluant l'équation (28) avec $r = d_i/2$, nous pouvons constater que :

$$(32): h = -\cot\alpha\left(\frac{d_i}{2} - \frac{d_o}{2} - d_o\csc\alpha\right) - \frac{\sqrt{d_o(1+\sin\alpha)(d_o - d_i\sin\alpha)}}{\sin^2\alpha}.$$

Cette équation a une solution analytique pour $d_i > a$ avec :

$$(33): d_i = d_o + \frac{2}{\cos^2\alpha}\left(\csc\alpha\sqrt{(d_o\sin\alpha(1+\sin\alpha))^2 + hd_o\sin\alpha(1+\sin\alpha)\sin(2\alpha)} - d_o(1+\sin\alpha) - h\sin\alpha\cos\alpha\right)$$

En remplaçant $d_i$ dans l'équation (33) par l'équation (31), le gain maximal en fonction de l'acceptance, du diamètre de la surface de couplage et de la hauteur du CPC creux est :

$$(34): G_{max} = \left(1 + \frac{2}{\cos^2\alpha}\left(\csc\alpha\sqrt{(\sin\alpha(1+\sin\alpha))^2 + \frac{h\sin\alpha(1+\sin\alpha)\sin(2\alpha)}{d_o}} - (1+\sin\alpha) - \frac{h\sin\alpha\cos\alpha}{d_o}\right)\right)^2,$$

En supposant que $d_o$ = 1 et en normalisant le CPC creux avec le rapport $h/d_o$, on peut exprimer le gain maximal normalisé du concentrateur en fonction de sa hauteur normalisée et de l'angle d'acceptance.

On voit sur la figure 6 des courbes de gain maximal normalisé attendues pour un CPC creux normalisé. Les courbes de gain maximal normalisé pour les huit angles d'acceptance $\alpha$ suivants sont représentées : 30, 32, 34, 36, 38, 40, 42 et 44 degrés.

Il est alors facile de conclure que le concentrateur creux doit être conçu pour une hauteur égale à la hauteur maximale 27 afin d'obtenir un gain maximal, ce qui est possible s'il n'y a pas de restriction de hauteur dans les spécifications de conception du CPC. Les CPCs ayant une hauteur inférieure à la hauteur maximale 27 sont appelés « CPCs tronqués ». La hauteur optimale du CPC creux 19 est donc la hauteur maximale.

On produit le jeu d'équations (35a)-(35d) nécessaire à la modélisation des CPCs creux :

$$(35a) : d_{i\,\max} = \frac{d_0}{\sin \alpha},$$

$$(35b) : h_{max} = \frac{d_0 \cos \alpha \, (1 + \sin \alpha)}{2\sin^2 \alpha},$$

$$(35c) : z_l = \cot \alpha \left( \frac{d_o}{2} + d_o \csc \alpha - \sqrt{r^2} \right) - \frac{\sqrt{d_o(1 + \sin \alpha)\left(d_o - 2\sqrt{r^2} \sin \alpha\right)}}{\sin^2 \alpha},$$

$$(35d) : G_{max} = \frac{1}{\sin^2 \alpha}.$$

Le jeu d'équations (35) comprend les paramètres de sortie, qui sont donc le diamètre optimal $d_{i\,\max}$ de la surface de collecte 10, la hauteur optimale $h_{max}$ du CPC, l'équation des portions de parabole, et le gain maximal $G_{max}$.

La deuxième étape de la deuxième phase de création d'un CPC creux vise à augmenter l'angle de communication maximum et à augmenter le flux radiant au niveau du photodétecteur. Pour cela, le concentrateur optique 19 est étendu par homothétie, plus précisément par un agrandissement (figure 7), ce qui donne notre nouveau CPCE. Pour cela, on prédéfinit un facteur d'expansion $f_e$ avec la condition $1 < f_e < 2$, pour dilater diamétralement un CPC creux avec le changement de variable $\{r \rightarrow (r - sign(r)\Delta d/2\}$, où $\Delta d = d_o (f_e - 1)$, ce qui permet d'obtenir l'ensemble des équations (36a)-(36b) :

$$(36a) : d_{i\,\max} = \frac{d_0}{\sin \alpha} + \Delta d$$

$$(36b) : z_l = \cot \alpha \left( \frac{d_o}{2} + d_o \csc \alpha - \sqrt{\left( r - \frac{sign(r)\Delta d}{2} \right)^2} \right)$$

$$- \frac{\sqrt{d_o(1 + \sin \alpha)\left( d_o - 2\sqrt{\left( r - \frac{sign(r)\Delta d}{2} \right)^2} \sin \alpha \right)}}{\sin^2 \alpha},$$

La valeur de l'incrément diamétral $\Delta d$ est déterminée expérimentalement, en tenant compte de l'excitance de l'émetteur, pour obtenir un angle de communication plus important.

Après expansion, le diamètre de la surface de couplage est également transformé en $\{d_o \rightarrow f_e d_o = d_o + \Delta d\}$. Il est important de noter la géométrie de la surface latérale 25 est néanmoins calculée avec le diamètre non-expansé, ce qui est la principale caractéristique du concentrateur ici proposé. Cette technique, qui n'est pas référencée dans la littérature existante, permet de transformer un CPC creux en un CPCE creux avec des points focaux F et F' internes au niveau de la section de couplage 24, comme le montre la figure 7.

Les dimensions du CPC creux 19 de la figure 5 sont les suivantes : $d_o$ = 4,4 mm, $\alpha$ = 37,5°, $h$ = 7,577 mm, et $d_i$ = 7,228 mm. La surface latérale a une distance focale $f$ = 3,539 mm.

Le CPC creux 19 représenté sur la figure 7 a alors été obtenu à partir du CPC creux 19 de la figure 5 par expansion. Les dimensions du CPC creux 19 de la figure 7 sont les suivantes : $\Delta d$ = 0,8 mm, $d_o$ = 4,4 + $\Delta d$ mm = 5,2 mm, $\alpha$ = 37,5°, $h$ = 7,577 mm, et $d_i$ = 7,228 + $\Delta d$ = 8,028 mm. La surface latérale a une distance focale $f$ = 3,539 mm.

On s'intéresse maintenant au cas où le concentrateur optique 8 selon l'invention ne comprend pas de CPC creux, mais est un concentrateur diélectrique (ou réfractif) et on décrit la première étape de la deuxième phase de conception d'un tel CPC diélectrique.

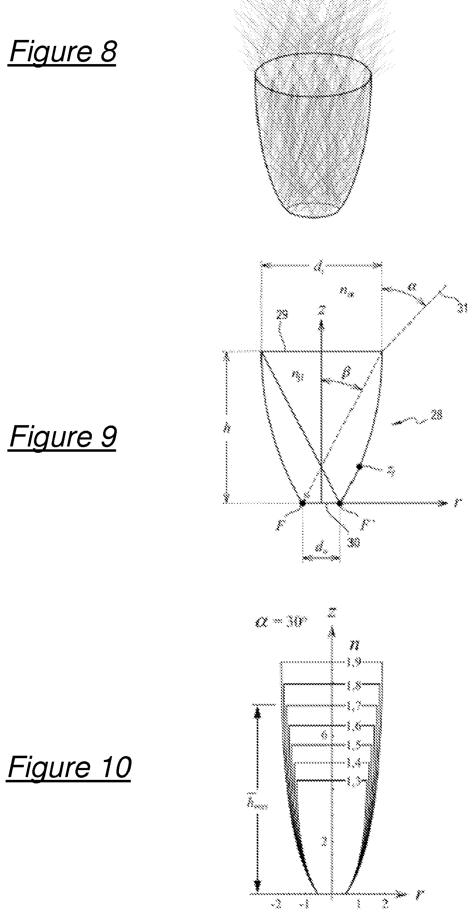

La figure 8 représente le cheminement des rayons lumineux dans un CPC diélectrique de hauteur $h$, de diamètre de surface de collecte $d_i$, de diamètre de surface de couplage $d_o$. Cette figure montre la réflexion interne totale (TIR pour *total internal reflexion*) des rayons sur la surface latérale.

Le concentrateur 28 de la figure 9 est un concentrateur à révolution diélectrique. Ce concentrateur est un CPC 28 monolithique et transparent avec une surface réfléchissante. On suppose que le CPC 28 est fabriqué avec un matériau isotrope et homogène d'indice de réfraction $n_\beta$, et immergé dans un milieu externe d'indice de réfraction $n_\alpha$ plus faible. Par « immergé », on entend que le CPC 28 se trouve plongé entièrement dans un milieu liquide ou gazeux. Ici, le milieu est de l'air (mais le milieu pourrait être différent, par exemple de l'eau).

L'indice de réfraction $n_\beta$ est un paramètre d'entrée de la première phase.

Le matériau avec lequel est fabriqué le CPC peut être par exemple du verre ou du plastique, par exemple le polycarbonate (PC), le polyméthacrylate de méthyle (PMMA) ou le silicone. Ici, le CPC est fabriqué en plastique.

On suppose que la surface de collecte 29 du CPC 28 est plane. Le diamètre $d_i$ de la surface de collecte 29 permet de collecter la lumière provenant d'une source de rayonnement située à l'infini. La fonction du CPC est d'amener la lumière de la surface de collecte 29 vers la surface de couplage 30. La surface de couplage 30 de diamètre $d_o$ est en contact physique avec la surface sensible de la photodiode.

Un rayon lumineux 31 frappant la surface de collecte 29 avec un angle d'acceptance $\alpha$ est réfracté dans le CPC avec un angle d'acceptance interne $\beta$ plus petit, avec la condition $n_\beta > n_\alpha$. La loi de Snell-Descartes régit la relation entre ces deux rayons, et donne $\beta = \sin^{-1}(n_\alpha \sin / n_\beta)$.

Compte tenu de la condition $\beta < \alpha$, on peut conclure qu'un concentrateur diélectrique est plus avantageux qu'un concentrateur creux. Un CPC diélectrique permet d'augmenter le gain maximal selon :

$$(37) : G_{max} = \left(1 + \frac{2}{\cos^2\beta}\left(\begin{array}{c} \csc\beta\sqrt{\left(\sin\beta\,(1+\sin\beta)\right)^2 + (h/d_o)\sin\beta\,(1+\sin\beta)\sin(2\beta)} \\ -(1+\sin\beta) - (h/d_o)\sin\beta\cos\beta \end{array}\right)\right)^2 .$$

La figure 10 montre la variation de la section méridionale optimale (en terme de gain optique) pour un CPC diélectrique normalisé, en fonction de son indice de réfraction relatif $n = n_\beta/n_\alpha$. Ici, $\alpha$ = 30°.

La comparaison rapide des équations (34) et (38) nous permet de voir que la seule différence est l'angle. En conséquence, les équations obtenues pour un CPC creux restent valables pour les CPCs diélectriques en modifiant la variable $\{\alpha \rightarrow \beta\}$. L'ensemble des équations (35a)-(35d) nécessaires pour concevoir un CPC diélectrique à symétrie de révolution avec un gain maximal se réduit ainsi à :

$$(38a) : d_{i\,\max} = \frac{d_0}{\sin\beta},$$

$$(38b) : h_{max} = \frac{d_0\cos\beta(1+\sin\beta)}{2\sin^2\beta},$$

$$(38c) : z_l = \cot\beta\left(\frac{d_o}{2} + d_o\csc\beta - \sqrt{r^2}\right) - \frac{\sqrt{d_o(1+\sin\beta)(d_o - 2\sqrt{r^2}\sin\beta)}}{\sin^2\beta},$$

$$(38d) : G_{max} = \frac{1}{\sin^2\beta}.$$

En substituant $\{\beta \to \sin^{-1}(n_\alpha \sin \alpha/n_\beta)\}$ dans l'équation (27) puis en simplifiant, ce jeu d'équations devient le jeu d'équations (39a)-(39d) :

$$(39a) : d_{i\,\max} = \frac{n_\beta d_0}{n_\alpha \sin \alpha},$$

$$(39b) : h_{max} = \frac{d_o(n_\alpha \sin \alpha + n_\beta)\sqrt{n_\beta^2 - n_\alpha^2 \sin^2 \alpha}}{2n_\alpha^2 \sin^2 \alpha},$$

$$(39c) : z_l = \frac{\left(d_o\left(\frac{1}{2} + \frac{n_\beta}{n_\alpha \sin \alpha}\right) - \sqrt{r^2}\right)\sqrt{n_\beta^2 - n_\alpha^2 \sin^2 \alpha}}{n_\alpha \sin \alpha} - \frac{n_\beta\sqrt{d_o(n_\beta + n_\alpha \sin \alpha)\left(n_\beta d_o - 2\sqrt{r^2}\, n_\alpha \sin \alpha\right)}}{(n_\alpha \sin \alpha)^2}$$

$$(39d) : G_{max} = n_\beta^2 / (n_\alpha^2 \sin^2 \alpha).$$

Le jeu d'équations (39a)-(39d) comprend les paramètres de sortie, qui sont donc le diamètre optimal de la surface de collecte $d_{i\,\max}$, la hauteur optimale $h_{max}$ du CPC, l'équation de la surface latérale de révolution, et le gain maximal $G_{max}$.

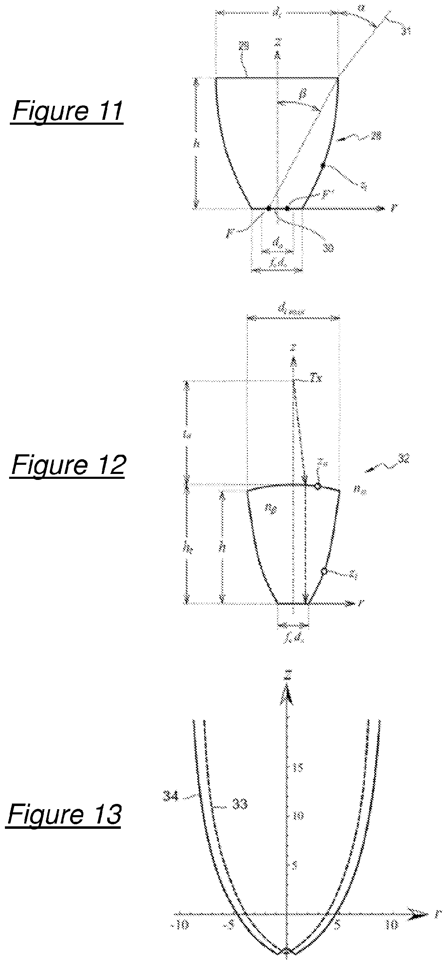

La deuxième étape de la deuxième phase de conception d'un CPC diélectrique vise à augmenter l'angle de communication maximum et le flux radiant au niveau du photodétecteur. Pour cela, le concentrateur optique 28 est étendu par homothétie, plus précisément par un agrandissement (figure 11), ce qui donne notre nouveau CPCE diélectrique.

Seul le diamètre de la surface de collecte 29 et le diamètre optimal de la surface de couplage 30 sont augmentés par cette homothétie. La hauteur optimale $h$ du concentrateur optique et la génératrice parabolique ne sont pas modifiées, même si l'équation de la surface latérale $z_l$ change. On voit ainsi sur la figure 13 la surface latérale 33 du concentrateur optique avant la mise en oeuvre de la deuxième étape de la deuxième phase, et la surface latérale 34 du concentrateur optique après la mise en oeuvre de la deuxième étape de la deuxième phase. On constate que le décalage radial est constant entre les deux surfaces latérales 33 et 34.

Afin de mettre en oeuvre cet agrandissement, on prédéfinit un facteur d'expansion $f_e$ avec la condition $1 < f_e < 2$, pour dilater diamétralement le CPC diélectrique avec le changement de variable $\{r \to (r - sign(r)\Delta d/2$, où $\Delta d = d_o(f_e - 1)$, ce qui permet d'obtenir l'ensemble des équations (40a)-(40b) :

$$(40a) : d_{i\,\max} = \frac{n_\beta d_0}{n_\alpha \sin \alpha} + \Delta d$$

$$(40b) : z_l = \frac{\left(d_o\left(\frac{1}{2} + \frac{n_\beta}{n_\alpha \sin \alpha}\right) - \sqrt{\left(r - \frac{sign(r)\Delta d}{2}\right)^2}\right)\sqrt{n_\beta^2 - n_\alpha^2 \sin^2 \alpha}}{n_\alpha \sin \alpha}$$

$$- \frac{n_\beta\sqrt{d_o(n_\beta + n_\alpha \sin \alpha)\left(n_\beta d_o - 2n_\alpha \sin \alpha\left(r - \frac{sign(r)\Delta d}{2}\right)^2\right)}}{(n_\alpha \sin \alpha)^2}.$$

Ces deux équations sont les plus importantes car elles décrivent les principales caractéristiques d'un CPCE diélectrique. Si $n_\alpha = n_\beta$, le CPCE diélectrique est transformée en un CPCE creux. Autrement dit, n'importe quelle CPCE peut être représenté avec les équations (40a), (39b), (40b) et (39d).

La valeur de l'incrément diamétral $\Delta d$ est déterminée expérimentalement, en tenant compte de l'excitance de l'émetteur, pour obtenir un angle de communication plus important.

Après expansion, le diamètre de la surface de couplage est également transformé en $\{d_o \to f_e d_o = d_o + \Delta d\}$. Il est important de noter que la géométrie de la surface latérale 19 est néanmoins calculée avec le diamètre non-expansé, ce qui est la principale caractéristique du concentrateur ici proposé. Cette technique, qui n'est pas référencée dans la littérature existante, permet de transformer un CPC diélectrique en un CPCE diélectrique avec des points focaux F et F' internes au niveau de la section de couplage 30, comme le montre la figure 11.

Après agrandissement, le diamètre de la surface de collecte et le diamètre optimal de la surface de couplage sont chacun augmentés d'une valeur égale à $\Delta d$.

Ce changement de diamètres, lors de la fabrication du concentrateur optique 8, permet d'augmenter l'angle de communication maximal de 5° lorsque $\Delta d$ = 1,6 mm. L'angle d'acceptance de $\alpha$ = 65° reste identique.

Avantageusement, on fait dépendre le $\Delta d$ utilisé des performances de communication du modem du dispositif de réception du point d'accès, c'est-à-dire de sa capacité à établir une communication avec un SNR donné. Le $\Delta d$ utilisé ne dépend donc pas uniquement de propriétés optiques.

On peut déduire de l'équation (40b) l'équation suivante :

$$(41): z = -11{,}3591 + 9{,}258 \sqrt{12{,}5714 - 1.81311 \sqrt{\left(r - 0{,}8\,\mathrm{sign}(r)\right)^2} - 1.63826}$$

$$\times \sqrt{\left(r - 0{,}8\,\mathrm{sign}(r)\right)^2}.$$

Cette équation est de la forme : $z = f(r)$.

La fonction $f$ est obtenue de la manière suivante : $z = f(r) = h_{max} - z_l$, avec $h_{max}$ et $z_l$ définis selon le jeu d'équations (39b) et (40b).

Pour aboutir à cette équation, on a utilisé les paramètres qui suivent.

La surface sensible de la photodiode a pour longueur $a$ et pour largeur $b$ : $a$ = 5,4 mm, $b$ = 4,8 mm.

On calcule le diamètre de la surface de couplage $d_0$ = $\sqrt{a^2 + b^2} = 7{,}225$ mm.

L'angle d'acceptance est : $\alpha$ = 65°.

L'augmentation diamétrale est $\Delta d$ = 1,8 mm.

Le premier indice de réfraction $n_\alpha$ correspond à l'indice de réfraction de l'air dans lequel est immergé le CPCE, c'est-à-dire $n_\alpha \simeq 1{,}000275$.

Le deuxième indice de réfraction $n_\beta$ correspond à l'indice de réfraction du matériau avec lequel est fabriqué le CPCE. On a ici : $n_\beta$ = 1,74. On note que l'indice de réfraction du matériau est égal à 1,76 pour de la lumière jaune mais est égal à 1,74 pour de la lumière infrarouge ($\lambda_t$ = 840-940 nm).

Pour un angle d'acceptance $\alpha$ prédéfini, et une ouverture de sortie normalisée $d_o$ = 1, $\overline{d_{imax}}$ et $\overline{h_{max}}$ sont calculés à partir des équations (40a) et (39b).

Les paramètres de sortie confèrent au concentrateur optique un encombrement optimal permettant de concentrer un flux radiant maximal sur le photodétecteur.

A ce stade de la conception, le concentrateur optique obtenu peut être apparenté à un CPCE (creux ou diélectrique) dans la mesure où sa surface de collecte 10 est plane.

La phase intermédiaire (optionnelle) consiste à transformer ce CPCE en un CPCE ayant une surface de collecte 10 réfringente courbe sphérique ou asphérique. Cette surface de collecte courbe permet d'optimiser le flux radiant concentré sur le photodétecteur lorsqu'il provient d'un émetteur lumineux en champ proche.

La figure 12 représente, en vue de face, un CPCE diélectrique 32 avec une telle surface de collecte courbe $z_a$.

La surface courbe de collecte est définie par l'équation suivante :

$$(42): z_a = h - \frac{cd_i^2}{4 + 2\sqrt{4 - (K+1)c^2 d_i^2}} - \frac{1}{4}\sum_{j=2}^{N} C_{2j}\, d_i^{2j}$$

$$+ \frac{cr^2}{1 + \sqrt{1 - (K+1)c^2 r^2}} + \sum_{j=2}^{N} C_{2j}\, r^{2j} + t_e.$$

où :

- $c$ est la courbure au sommet. Si les rayons à l'intérieur de la lentille doivent être exempts d'aberration sphérique, cette courbure est définie par :

$$(43): c = -\frac{1}{(n_\beta/n_\alpha - 1)t_a},$$

$n_\beta$ étant l'indice de réfraction du matériau utilisé pour fabriquer le concentrateur optique, $n_\alpha$ étant un indice d'un milieu dans lequel est immergé le concentrateur optique, $t_a$ étant une distance entre un sommet de la surface de collecte et une source lumineuse Tx avec laquelle communique le dispositif de réception de signaux optiques ;
- $K$ est la constante conique. Il est recommandé qu'elle soit hyperbolique, c'est à dire :

$$(44): K = -\left(n_\beta/n_\alpha\right)^2;$$

- $C_{2j}$ sont les $N$ - 1 coefficients de déformation asphérique ;
- $h$ est la hauteur du concentrateur optique sans la surface de collecte ;
- $d_i$ est le diamètre de la surface de collecte.
- $t_e$ est l'épaisseur au bord.

La hauteur totale corrigée du concentrateur optique est alors :

$$(45): h_t = z_a(0) = h - \frac{cd_i^2}{4 + 2\sqrt{4 - (K+1)c^2 d_i^2}} - \frac{1}{4}\sum_{j=2}^{N} C_{2j}\, d_i^{2j} + t_e.$$

Dans le cas d'un CPCE creux, cette surface de collecte courbe se matérialise par une lentille de collecte. Cette lentille de collecte possède une surface supérieure de collecte dont la forme est définie par (42) et une surface postérieure dont la forme est définie par :

$$(46): z_b = h - \frac{cd_{i\,\max}^2}{4 + 2\sqrt{4 - (K+1)c^2 d_i^2}} - \frac{1}{4}\sum_{j=2}^{N} C_{2j}\, d_i^{2j}$$

$$+ \frac{cr^2}{1 + \sqrt{1 - (K+1)c^2 r^2}} + \sum_{j=2}^{N} C_{2j}\, r^{2j}.$$

où $c$, $K$ et $C_{2j}$ sont des variables locales définies pour cette surface postérieur.

Il est recommandé que cette lentille soit hyperbolique-plane d'indice de réfraction $n_\gamma = n_\beta$. Cette lentille hyperbolique-plane est ensuite assemblée avec le concentrateur creux obtenu à l'issue des phases précédentes de manière à remplacer son ouverture de collecte 23.

Dans le cas d'un concentrateur diélectrique, la correction de la surface de collecte 10 se fait simplement en modifiant l'équation de cette surface de collecte 10 en utilisant (42) .

Comme on l'a vu plus tôt, la phase intermédiaire est optionnelle : le procédé de conception décrit ici pourrait être mis en oeuvre en conservant une surface de collecte plane.

On note toutefois que la phase intermédiaire phase, si elle est mise en oeuvre, est susceptible de modifier la hauteur optimale et donc l'encombrement optimal du concentrateur optique 28.

Le procédé de conception selon l'invention comprend alors une troisième phase qui consiste à vérifier que l'encombrement optimal du CPCE 28 est acceptable par rapport à des contraintes d'intégration dans le dispositif de réception. Les contraintes d'intégration consistent par exemple à ne pas dépasser une hauteur et/ou une largeur et/ou une longueur d'un volume prévu pour accueillir le concentrateur optique.

Si c'est le cas, les paramètres de sortie sont validés pour fabriquer le CPCE 28.

Si ce n'est pas le cas, c'est-à-dire si le CPCE obtenu 28 est trop encombrant, le procédé de conception comprend une quatrième phase.

Si le CPCE 28 comprend un concentrateur creux, la quatrième phase comprend tout d'abord une première étape de correction, et/ou une deuxième étape de correction puis une troisième étape de correction. La première étape de correction consiste à modifier le facteur d'expansion du CPCE, ce qui modifie le diamètre de la surface de collecte et le diamètre optimal de la surface de couplage du CPCE mais sans modifier la hauteur optimale du CPCE ni la forme de la génératrice parabolique. La deuxième étape consiste à conférer au CPCE 28 une hauteur effective inférieure à la hauteur maximale, de manière à obtenir un encombrement acceptable du concentrateur optique 28. On parle alors de CPCE « tronqué ». La troisième étape consiste à réitérer la deuxième phase et la phase intermédiaire si celles-ci est mise en oeuvre, c'est-à-dire à actualiser les dimensions de la lentille courbe ajoutée au CPCE creux en utilisant les valeurs des variables mises à jour dans l'équation (42), puis la troisième phase, jusqu'à obtenir un encombrement effectif acceptable du concentrateur optique 28.

Si le CPCE 28 est un CPCE diélectrique, la quatrième phase comprend tout d'abord une première étape de correction, et/ou une deuxième étape de correction, et/ou une troisième étape de correction. La première étape de correction consiste à modifier le facteur d'expansion du CPCE, ce qui modifie le diamètre de la surface de collecte et le diamètre optimal de la surface de couplage du CPCE mais sans modifier la hauteur optimale du CPCE ni la forme de la génératrice parabolique. La deuxième étape de correction consiste à conférer au concentrateur optique 28 une hauteur effective inférieure à la hauteur maximale de manière à obtenir un encombrement acceptable du concentrateur optique. La troisième étape de correction consiste à augmenter le deuxième indice de réfraction $n_\beta$ et à réitérer la deuxième phase et la première phase intermédiaire si celles-ci sont mises en oeuvre, et la troisième phase, jusqu'à obtenir un encombrement effectif acceptable du concentrateur optique 28.

On peut donc soit modifier l'expansion du concentrateur, soit tronquer le concentrateur optique CPCE 28, soit augmenter l'indice de réfraction $n_\beta$ puis réitérer la deuxième phase, la première phase intermédiaire et la troisième phase (avec les nouveaux paramètres d'entrée incluant le nouvel indice de réfraction $n_\beta$ ) pour obtenir un concentrateur optique de hauteur effective réduite mais qui, grâce à cette réduction de l'indice de réfraction, présente un gain acceptable. On peut aussi réaliser les trois corrections de manière combinée.

Le procédé de conception qui vient d'être décrit est donc adapté à la maximisation de la puissance lumineuse détectée par la photodiode 7, à la surface sensible de la photodiode 7 elle-même et à la manière dont la photodiode 7 est intégrée dans le point d'accès 1.

Avantageusement, on applique sur la surface latérale du concentrateur optique 8, à la fin de sa fabrication, un vernis antireflet ou une couche mince afin d'améliorer les performances de capture et de réflexions totales internes du concentrateur optique 8.

Bien entendu, l'invention n'est pas limitée au mode de réalisation décrit mais englobe toute variante entrant dans le champ de l'invention telle que définie par les revendications.

**Revendications**

**1.** Concentrateur parabolique composé, destiné à être intégré dans un dispositif de réception de signaux optiques utilisé pour mettre en œuvre une communication optique sans fil, le concentrateur parabolique composé (8 ; 32) présentant une surface de couplage (9, 24) destinée à être positionnée sur une surface sensible d'un photodétecteur (7) du dispositif de réception, une surface de collecte (10, 23) destinée à recevoir les signaux optiques, et une surface latérale (11) située entre la surface de couplage et la surface de collecte, la surface latérale comprenant deux portions paraboliques inclinées et symétriques lorsqu'elle est vue dans un plan de coupe passant par un axe de référence du concentrateur parabolique composé, **caractérisé en ce que** la surface latérale est définie par l'équation suivante :

$$z_l = \frac{\left(d_o\left(\frac{1}{2}+\frac{n_\beta}{n_\alpha \sin \alpha}\right) - \sqrt{\left(r-\frac{sign(r)\Delta d}{2}\right)^2}\right)\sqrt{n_\beta^2 - n_\alpha^2 \sin^2 \alpha}}{n_\alpha \sin \alpha} -$$

$$\frac{n_\beta \sqrt{d_o(n_\beta + n_\alpha \sin \alpha)\left(n_\beta d_o - 2n_\alpha \sin \alpha \left(r - \frac{sign(r)\Delta d}{2}\right)^2\right)}}{(n_\alpha \sin \alpha)^2},$$

cette équation utilisant des paramètres d'entrée comprenant $d_o$ qui est un diamètre de la surface sensible du photodétecteur (7), $\alpha$ qui est un angle d'acceptance, $n_\alpha$ qui est un premier indice de réfraction d'un milieu dans lequel est destiné à être immergé le concentrateur parabolique composé, $n_\beta$ qui est un deuxième indice de réfraction d'un matériau utilisé pour fabriquer le concentrateur parabolique composé, et $f_e$ qui est un facteur d'expansion diamétral du concentrateur parabolique composé permettant d'augmenter un diamètre global du concentrateur parabolique composé sans augmenter sa hauteur ni modifier la forme des portions paraboliques inclinées et symétriques, avec $\Delta d$ qui est tel que : $\Delta d = d_0(f_e\text{-}1)$.

2. Concentrateur parabolique composé selon la revendication 1, le concentrateur parabolique composé étant un concentrateur diélectrique (28), le premier indice de réfraction $n_\alpha$ et le deuxième indice de réfraction $n_\beta$ étant tels que :

$$1 < n_\alpha < n_\beta .$$

3. Concentrateur parabolique composé selon la revendication 1, le concentrateur parabolique composé étant formé par un assemblage d'un concentrateur creux (19) et d'une lentille de collecte comprenant la surface de collecte.

4. Concentrateur parabolique composé selon l'une des revendications précédentes, dans lequel la surface de collecte est courbe et définie par l'équation suivante :

$$z_a = z_l(d_i/2) - \frac{cd_i^2}{4 + 2\sqrt{4 - (K+1)c^2 d_i^2}} - \frac{1}{4}\sum_{j=2}^{N} C_{2j}\, d_i^{2j} + \frac{cr^2}{1 + \sqrt{1 - (K+1)c^2 r^2}} + \sum_{j=2}^{N} C_{2j}\, r^{2j} + t_e$$

où :

- $c$ est une courbure au sommet de la surface de collecte ;
- $K$ est une constante conique, par exemple de valeur $K =$
- $(n_\beta/n_\alpha)^2$ ;
- les $C_{2j}$ sont des coefficients de déformation asphérique ;
- $d_i$ est un diamètre de la surface de collecte ;
- $t_e = 0$ si le concentrateur parabolique composé est un concentrateur diélectrique (28), ou $t_e$ est une épaisseur au bord de la lentille de collecte si le concentrateur parabolique composé est formé par un assemblage d'un concentrateur creux (19) et d'une lentille de collecte comprenant la surface de collecte.

5. Concentrateur parabolique composé selon la revendication 4, dans lequel on a :

$$c = -\frac{1}{\left(\frac{n_\beta}{n_\alpha} - 1\right) t_a},$$

$t_a$ étant une distance entre le sommet de la surface de collecte et une source lumineuse avec laquelle est agencée pour communiquer le dispositif de réception de signaux optiques.

6. Concentrateur parabolique composé selon la revendication 3, dans lequel une surface arrière de la lentille de collecte est définie par l'équation suivante :

$$z_b = z_l(d_i/2) - \frac{c'd_i^2}{4 + 2\sqrt{4 - (K'+1)c'^2 d_i^2}} - \frac{1}{4}\sum_{j=2}^{N} C'_{2j}\, d_i^{2j} + \frac{c'r^2}{1 + \sqrt{1 - (K'+1)c'^2 r^2}} + \sum_{j=2}^{N} C'_{2j}\, r^{2j}$$

où :

    - $c'$ est une courbure au sommet ;
    - $K'$ est une constante conique ;
    - les $C'_{2j}$ sont des coefficients de déformation asphérique ;
    - $z_l(d_i/2) = h$ est une hauteur du concentrateur parabolique composé sans la surface de collecte ;
    - $d_i$ est un diamètre de la surface de collecte.

**7.** Concentrateur parabolique composé selon l'une des revendications précédentes, comprenant en outre une ou plusieurs couches antireflets ou réfléchissantes appliquées sur la surface latérale.

**8.** Dispositif de réception de signaux optiques, comportant au moins un ensemble optique comprenant un photodétecteur (7) et un concentrateur parabolique composé (8) selon l'une des revendications précédentes, dont la surface de couplage (9) est positionnée sur la surface sensible du photodétecteur (7) .

**9.** Equipement de communication optique sans fil, de type point d'accès (1) ou terminal utilisateur, comprenant un dispositif de réception de signaux optiques selon la revendication 8.

**10.** Procédé de fabrication d'un concentrateur parabolique composé (8 ; 32) destiné à être intégré dans un dispositif de réception de signaux optiques utilisé pour mettre en oeuvre une communication optique sans fil, le concentrateur parabolique composé (8 ; 32) présentant une surface de couplage (9, 24) destinée à être positionnée sur une surface sensible d'un photodétecteur (7) du dispositif de réception, une surface de collecte (10, 23) destinée à recevoir les signaux optiques, et une surface latérale (11) située entre la surface de couplage et la surface de collecte, la surface latérale comprenant deux portions paraboliques inclinées et symétriques lorsqu'elle est vue dans un plan de coupe passant par un axe de référence du concentrateur parabolique composé, la surface latérale étant définie par une équation utilisant des paramètres d'entrée comprenant un diamètre $d_o$ de la surface sensible du photodétecteur, un angle d'acceptance $\alpha$, un premier indice de réfraction $n_\alpha$ d'un milieu dans lequel est destiné à être immergé le concentrateur parabolique composé, un deuxième indice de réfraction $n_\beta$ d'un matériau utilisé pour fabriquer le concentrateur parabolique composé, et un facteur d'expansion diamétral $f_e$ du concentrateur parabolique composé permettant d'augmenter un diamètre global du concentrateur parabolique composé sans augmenter sa hauteur ni modifier la forme des portions paraboliques inclinées et symétriques, le procédé comportant les phases successives suivantes :

    - une première phase comprenant l'étape de définir les paramètres d'entrée ; et
    - une deuxième phase comprenant l'étape de déterminer, à partir des paramètres d'entrée, des paramètres de sortie comprenant un diamètre optimal ($d_i$) de la surface de collecte, une hauteur optimale ($h$) du concentrateur parabolique composé, l'équation pour définir la surface latérale qui utilise les paramètres d'entrée sous la forme suivante :

$$- \quad z_l = \frac{\left(d_o\left(\frac{1}{2}+\frac{n_\beta}{n_\alpha \sin\alpha}\right) - \sqrt{\left(r - \frac{sign(r)\Delta d}{2}\right)^2}\right)\sqrt{n_\beta^2 - n_\alpha^2 \sin^2\alpha}}{n_\alpha \, si} \quad -$$

$$\frac{n_\beta \sqrt{d_o(n_\beta + n_\alpha \sin\alpha)\left(n_\beta d_o - 2n_\alpha \sin\alpha\left(r - \frac{sign(r)\Delta d}{2}\right)^2\right)}}{(n_\alpha \sin\alpha)^2},$$

avec $\Delta d$ qui est tel que $\Delta d = d_o(f_e - 1)$, et un gain du concentrateur parabolique composé, les paramètres de sortie conférant au concentrateur parabolique composé un encombrement optimal permettant de concentrer un flux radiant maximal sur le photodétecteur et d'optimiser son angle d'acceptance $\alpha$,

préalablement à la fabrication du concentrateur parabolique composé.

**11.** Procédé de fabrication selon la revendication 10, comprenant en outre une phase intermédiaire, mise en oeuvre après la deuxième phase et avant une troisième phase, et comprenant l'étape de conférer à la surface de collecte une forme courbe, la troisième phase comprenant alors les étapes de vérifier que l'encombrement optimal du concentrateur parabolique composé est acceptable par rapport à des contraintes d'intégration dans le dispositif de réception, et de valider les paramètres de sortie pour fabriquer le concentrateur parabolique composé si c'est le cas ou de passer à une quatrième phase corrective avant fabrication si ce n'est pas le cas.

**12.** Procédé de fabrication selon la revendication 11, dans lequel un concentrateur creux (19) est obtenu à l'issue de la première phase et de la deuxième phase, et dans lequel la troisième phase comprend l'étape de définir une lentille de collecte comprenant la surface de collecte et qui est destinée à être assemblée avec le concentrateur creux (19) pour former le concentrateur parabolique composé.

**13.** Procédé de fabrication selon les revendications 11 et 12, dans lequel la quatrième phase corrective, mise en oeuvre suite à la troisième phase dans le cas où l'encombrement optimal n'est pas acceptable, comprend une première étape de correction consistant à modifier le diamètre optimal de la surface de collecte et un diamètre de la surface de couplage du concentrateur parabolique composé mais sans modifier la hauteur optimale du concentrateur parabolique composé ni la forme des portions paraboliques inclinées et symétriques, et/ou une seconde étape de correction consistant à conférer au concentrateur creux une hauteur effective inférieure à la hauteur optimale de manière à obtenir un encombrement acceptable du concentrateur parabolique composé, et une troisième étape consistant à réitérer la deuxième phase et la phase intermédiaire si celles-ci est mise en oeuvre, puis la troisième phase, jusqu'à obtenir un encombrement effectif acceptable du concentrateur parabolique composé.

**14.** Procédé de fabrication selon l'une des revendications 10 ou 11, dans lequel un concentrateur diélectrique (28) est obtenu à l'issue de la première phase et de la deuxième phase.

**15.** Procédé de fabrication selon les revendications 11 et 14, dans lequel la quatrième phase corrective, mise en oeuvre suite à la troisième phase dans le cas où l'encombrement optimal n'est pas acceptable, comprend une première étape de correction consistant à modifier un diamètre de la surface de collecte et le diamètre optimal de la surface de couplage du concentrateur parabolique composé mais sans modifier la hauteur optimale du concentrateur parabolique composé ni la forme des portions paraboliques inclinées et symétriques, et/ou une seconde étape de correction consistant à conférer au concentrateur diélectrique une hauteur effective inférieure à la hauteur optimale de manière à obtenir un encombrement acceptable du concentrateur parabolique composé et/ou une troisième étape de correction consistant à augmenter le deuxième indice de réfraction et à réitérer la deuxième phase et la phase intermédiaire si celle-ci est mise en oeuvre, puis la troisième phase, jusqu'à obtenir un encombrement acceptable du concentrateur parabolique composé.

**Patentansprüche**

**1.** Zusammengesetzter parabolischer Konzentrator, der dazu bestimmt ist, in eine Vorrichtung zum Empfangen von optischen Signalen, die verwendet wird, um eine optische drahtlose Kommunikation zu implementieren, wobei der zusammengesetzte parabolische Konzentrator (8; 32) eine Kopplungsoberfläche (9, 24), die dazu bestimmt ist, auf einer empfindlichen Oberfläche eines Fotodetektors (7) der Empfangsvorrichtung positioniert zu werden, eine Sammeloberfläche (10, 23), die dazu bestimmt ist, die optischen Signale zu empfangen, und eine Seitenoberfläche (11) umfasst, die sich zwischen der Kopplungsoberfläche und der Sammeloberfläche befindet, wobei die Seitenoberfläche zwei geneigte und symmetrische parabolische Abschnitte umfasst, wenn sie in einer Querschnittsebene betrachtet wird, die durch eine Referenzachse des zusammengesetzten parabolischen Konzentrators verläuft, **dadurch gekennzeichnet, dass** die Seitenoberfläche durch die folgende Gleichung definiert wird:

$$Z_l = \frac{\left(d_o\left(\frac{1}{2}+\frac{n_\beta}{n_\alpha \sin \alpha}\right) - \sqrt{\left(r-\frac{sign(r)\Delta d}{2}\right)^2}\right)\sqrt{n_\beta^2-n_\alpha^2 \sin^2 \alpha}}{n_\alpha \sin \alpha} -$$

$$\frac{n_\beta \sqrt{d_o(n_\beta+n_\alpha \sin \alpha)\left(n_\beta d_o-2n_\alpha \sin \alpha\left(r-\frac{sign(r)\Delta d}{2}\right)^2\right)}}{(n_\alpha \sin \alpha)^2},$$

wobei diese Gleichung Eingabeparameter verwendet, die $d_o$, das ein Durchmesser der empfindlichen Oberfläche des Fotodetektors (7) ist, $\alpha$, das ein Akzeptanzwinkel ist, $n_\alpha$, das ein erster Brechungsindex eines Mediums ist, in das der zusammengesetzte parabolische Konzentrator eingetaucht werden soll, $n_\beta$, das ein zweiter Brechungsindex eines Materials ist, das verwendet wird, um den zusammengesetzten parabolischen Konzentrator herzustellen, und $f_e$, das ein diametraler Ausdehnungsfaktor des zusammengesetzten parabolischen Konzentrators ist, der es ermöglicht, einen Gesamtdurchmesser des zusammengesetzten parabolischen Konzentrators zu vergrößern, ohne seine Höhe zu vergrößern oder die Form der geneigten und symmetrischen parabolischen Abschnitte zu verändern, umfassen, wobei $\Delta d$ derart ist, dass: $\Delta d = d_o (f_e - 1)$.

2. Zusammengesetzter parabolischer Konzentrator nach Anspruch 1, wobei der zusammengesetzte parabolische Konzentrator ein dielektrischer Konzentrator (28) ist, wobei der erste Brechungsindex $n_\alpha$ und der zweite Brechungsindex $n_\beta$ derart sind, dass:

$$1 < n_\alpha < n_\beta.$$

3. Zusammengesetzter parabolischer Konzentrator nach Anspruch 1, wobei der zusammengesetzte parabolische Konzentrator durch eine Anordnung aus einem hohlen Konzentrator (19) und einer Sammellinse, die die Sammeloberfläche umfasst, gebildet wird.

4. Zusammengesetzter parabolischer Konzentrator nach einem der vorhergehenden Ansprüche, wobei die Sammeloberfläche gekrümmt und durch die folgende Gleichung definiert ist:

$$z_a = z_l(d_i/2) - \frac{cd_i^2}{4 + 2\sqrt{4 - (K + 1)c^2d_i^2}} - \frac{1}{4}\sum_{j=2}^{N} C_{2j} d_i^{2j} + \frac{cr^2}{1 + \sqrt{1 - (K + 1)c^2r^2}} + \sum_{j=2}^{N} C_{2j} r^{2j} + t_e$$

wobei:

  - c eine Krümmung an der Oberseite der Sammeloberfläche ist;
  - $K$ eine konische Konstante ist, zum Beispiel mit dem Wert $K = - (n_\beta/n_\alpha)^2$;
  - $C_{2j}$ asphärische Verformungskoeffizienten sind;
  - $d_i$ ein Durchmesser der Sammeloberfläche ist;
  - $t_e = 0$, wenn der zusammengesetzte parabolische Konzentrator ein dielektrischer Konzentrator (28) ist, wobei $t_e$ eine Dicke am Rand der Sammellinse ist, wenn der zusammengesetzte parabolische Konzentrator durch eine Anordnung aus einem hohlen Konzentrator (19) und einer Sammellinse, die die Sammeloberfläche umfasst, gebildet wird.

5. Zusammengesetzter parabolischer Konzentrator nach Anspruch 4, wobei Folgendes vorhanden ist:

$$c = -\frac{1}{\left(\frac{n_\beta}{n_\alpha} - 1\right) t_a},$$

wobei $t_a$ ein Abstand zwischen der Oberseite der Sammeloberfläche und einer Lichtquelle ist, die so angeordnet ist, dass die Vorrichtung zum Empfangen von optischen Signalen mit ihr kommuniziert.

**6.** Zusammengesetzter parabolischer Konzentrator nach Anspruch 3, wobei eine Rückfläche der Sammeloberfläche durch die folgende Gleichung definiert ist:

$$z_b = z_l(d_i/2) - \frac{c'd_i^2}{4 + 2\sqrt{4 - (K'+1)c'^2 d_i^2}} - \frac{1}{4}\sum_{j=2}^{N} C'_{2j}\, d_i^{2j} + \frac{c'r^2}{1 + \sqrt{1 - (K'+1)c'^2 r^2}} + \sum_{j=2}^{N} C'_{2j}\, r^{2j}$$

wobei:

- $c'$ eine Krümmung an der Oberseite ist;
- $K'$ eine konische Konstante ist;
- $C'_{2j}$ asphärische Verformungskoeffizienten sind;
- $z_l(di/2) = h$ eine Höhe des zusammengesetzten parabolischen Konzentrators ohne die Sammeloberfläche ist;
- $d_i$ ein Durchmesser der Sammeloberfläche ist.

**7.** Zusammengesetzter parabolischer Konzentrator nach einem der vorhergehenden Ansprüche, der ferner eine oder mehrere auf der Seitenoberfläche aufgebrachte Antireflexions- oder Reflexionsschichten umfasst.

**8.** Vorrichtung zum Empfangen von optischen Signalen, die mindestens eine optische Anordnung umfasst, die einen Fotodetektor (7) und einen zusammengesetzten parabolischen Konzentrator (8) nach einem der vorhergehenden Ansprüche umfasst, dessen Kopplungsoberfläche (9) auf der empfindlichen Oberfläche des Fotodetektors (7) positioniert ist.

**9.** Drahtlose optische Kommunikationsausrüstung, vom Typ Zugangspunkt (1) oder Benutzerterminal, die eine Vorrichtung zum Empfangen von optischen Signalen nach Anspruch 8 umfasst.

**10.** Herstellungsverfahren für einen zusammengesetzten parabolischen Konzentrator (8; 32) der dazu bestimmt ist, in eine Vorrichtung zum Empfangen von optischen Signalen integriert zu werden, die verwendet wird, um eine optische drahtlose Kommunikation zu implementieren, wobei der zusammengesetzte parabolische Konzentrator (8; 32) eine Kopplungsoberfläche (9, 24), die dazu bestimmt ist, auf einer empfindlichen Oberfläche eines Fotodetektors (7) der Empfangsvorrichtung positioniert zu werden, eine Sammeloberfläche (10, 23), die dazu bestimmt ist, die optischen Signale zu empfangen, und eine Seitenoberfläche (11), die sich zwischen der Kopplungsoberfläche und der Sammeloberfläche befindet, umfasst, wobei die Seitenoberfläche zwei geneigte und symmetrische parabolische Abschnitte umfasst, wenn sie in einer Querschnittsebene betrachtet werden, die durch eine Referenzachse des zusammengesetzten parabolischen Konzentrators verläuft, wobei die Seitenoberfläche durch eine Gleichung definiert wird, die Eingabeparameter verwendet, die einen Durchmesser $d_o$ der empfindlichen Oberfläche des Fotodetektors, einen Akzeptanzwinkel $\alpha$, einen ersten Brechungsindex $n_\alpha$ eines Mediums, in das der zusammengesetzte parabolische Konzentrator eingetaucht werden soll, einen zweiten Brechungsindex $n_\beta$ eines Materials, das verwendet wird, um den zusammengesetzten parabolischen Konzentrator herzustellen, und einen diametralen Ausdehnungsfaktor $f_e$ des zusammengesetzten parabolischen Konzentrators, der es ermöglicht, einen Gesamtdurchmesser des zusammengesetzten parabolischen Konzentrators zu vergrößern, ohne seine Höhe zu vergrößern oder die Form der geneigten und symmetrischen parabolischen Abschnitte zu verändern, umfassen, wobei das Verfahren die folgenden aufeinanderfolgenden Phasen umfasst:

- eine erste Phase, die den Schritt des Definierens der Eingabeparameter umfasst; und
- eine zweite Phase, die den Schritt des Bestimmens, anhand der Eingabeparameter, von Ausgabeparametern, die einen optimalen Durchmesser ($d_i$) der Sammeloberfläche, eine optimale Höhe ($h$) des zusammengesetzten parabolischen Konzentrators, die Gleichung zum Definieren der Seitenoberfläche, die die Eingabeparameter in der folgenden Form verwendet:

$$z_l = \frac{\left(d_o\left(\frac{1}{2}+\frac{n_\beta}{n_\alpha \sin \alpha}\right) - \sqrt{\left(r-\frac{sign(r)\Delta d}{2}\right)^2}\right)\sqrt{n_\beta^2-n_\alpha^2 \sin^2\alpha}}{n_\alpha \text{ si}}$$

$$\frac{n_\beta \sqrt{d_o(n_\beta+n_\alpha \sin \alpha)\left(n_\beta d_o - 2n_\alpha \sin \alpha \left(r-\frac{sign(r)\Delta d}{2}\right)^2\right)}}{(n_\alpha \sin \alpha)^2},$$

wobei $\Delta d$ derart ist, dass $\Delta d = d_o(f_e - 1)$, und eine Verstärkung des zusammengesetzten parabolischen Konzentrators umfassen, wobei die Ausgabeparameter dem zusammengesetzten parabolischen Konzentrator eine optimale Größe verleihen, die es ermöglicht, einen maximalen Strahlungsflusses auf den Fotodetektor zu konzentrieren und seinen Akzeptanzwinkel $\alpha$ vor der Herstellung des zusammengesetzten parabolischen Konzentrators zu optimieren.

11. Herstellungsverfahren nach Anspruch 10, das ferner eine Zwischenphase umfasst, die nach der zweiten Phase und vor einer dritten Phase implementiert wird, und den Schritt des Verleihens der Sammeloberfläche einer gekrümmten Form umfasst, wobei die dritte Phase dann die Schritte des Überprüfens, ob die optimale Größe des zusammengesetzten parabolischen Konzentrators in Bezug auf Integrationsbeschränkungen in der Empfangsvorrichtung akzeptabel ist, und des Validierens der Ausgabeparameter zum Herstellen des zusammengesetzten parabolischen Konzentrators, wenn dies der Fall ist, oder des Fortfahrens mit einer vierten Korrekturphase vor dem Herstellen umfasst, wenn dies nicht der Fall ist.

12. Herstellungsverfahren nach Anspruch 11, wobei am Ende der ersten Phase und der zweiten Phase ein hohler Konzentrator (19) erhalten wird, und wobei die dritte Phase den Schritt des Definierens einer Sammellinse umfasst, die die Sammeloberfläche umfasst und die dazu bestimmt ist, mit dem hohlen Konzentrator (19) zusammengebaut zu werden, um den zusammengesetzten parabolischen Konzentrator zu bilden.

13. Herstellungsverfahren nach den Ansprüchen 11 und 12, wobei die vierte Korrekturphase, die am Ende der dritten Phase in dem Fall implementiert wird, in dem die optimale Größe nicht akzeptabel ist, einen ersten Korrekturschritt, der darin besteht, den optimalen Durchmesser der Sammeloberfläche und einen Durchmesser der Kopplungsoberfläche des zusammengesetzten parabolischen Konzentrators zu modifizieren, jedoch ohne die optimale Höhe des zusammengesetzten parabolischen Konzentrators oder die Form der geneigten und symmetrischen parabolischen Abschnitte zu verändern, und/oder einen zweiten Korrekturschritt, der darin besteht, dem hohlen Konzentrator derart eine effektive Höhe, die kleiner als die optimale Höhe ist, zu verleihen, um eine akzeptable Größe des zusammengesetzten parabolischen Konzentrators zu erhalten, und einen dritten Schritt umfasst, der darin besteht, die zweite Phase und die Zwischenphase, falls diese implementiert wird, und dann die dritte Phase zu wiederholen, bis eine akzeptable effektive Größe des parabolischen Konzentrators erhalten wird.

14. Herstellungsverfahren nach einem der Ansprüche 10 oder 11, wobei am Ende der ersten Phase und der zweiten Phase ein dielektrischer Konzentrator (28) erhalten wird.

15. Herstellungsverfahren nach einem der Ansprüche 11 und 14, wobei die vierte Korrekturphase, die nach der dritten Phase in dem Fall implementiert wird, in dem die optimale Größe nicht akzeptabel ist, einen ersten Korrekturschritt, der darin besteht, einen Durchmesser der Sammeloberfläche und den Durchmesser der Kopplungsoberfläche des zusammengesetzten parabolischen Konzentrators zu modifizieren, jedoch ohne die optimale Höhe des zusammengesetzten parabolischen Konzentrators oder die Form der geneigten und symmetrischen parabolischen Abschnitte zu verändern, und/oder einen zweiten Korrekturschritt, der darin besteht, dem dielektrischen Konzentrator derart eine effektive Höhe, die kleiner als die optimale Höhe ist, zu verleihen, um eine akzeptable Größe des zusammengesetzten parabolischen Konzentrators zu erhalten, und/oder einen dritten Korrekturschritt umfasst, der darin besteht, den zweiten Brechungsindex zu vergrößern und die zweite Phase und die Zwischenphase, falls diese implementiert wird, und dann die dritte Phase zu wiederholen, bis eine akzeptable effektive Größe des parabolischen Konzentrators erhalten wird.

**Claims**

1. A compound parabolic concentrator for integration into an optical signal receiving device used to implement optical wireless communication, the compound parabolic concentrator (8 ; 32) comprising a coupling surface (9, 24) for positioning on a sensitive surface of a photodetector (7) of the receiving device, a collecting surface (10, 23) for receiving optical signals, and a side surface (11) located between the coupling surface and the collecting surface, the side surface comprising two inclined and symmetrical parabolic portions when viewed in a cross-sectional plane passing through a reference axis of the compound parabolic concentrator, **characterized in that** the side surface is defined by the following equation:

$$z_l = \frac{\left(d_o\left(\frac{1}{2}+\frac{n_\beta}{n_\alpha \sin\alpha}\right) - \sqrt{\left(r-\frac{sign(r)\Delta d}{2}\right)^2}\right)\sqrt{n_\beta^2-n_\alpha^2\sin^2\alpha}}{n_\alpha \, si} -$$

$$\frac{n_\beta \sqrt{d_o(n_\beta+n_\alpha\sin\alpha)\left(n_\beta d_o-2n_\alpha \, si \quad \left(r-\frac{sign(r)\Delta d}{2}\right)^2\right)}}{(n_\alpha\sin\alpha)^2},$$

this equation using input parameters including $d_o$ which is a diameter of the sensitive surface of the photodetector (7), $\alpha$ which is an acceptance angle, $n_\alpha$ which is a first refractive index of a medium wherein the compound parabolic concentrator is to be immersed, $n_\beta$ which is a second refractive index of a material used to manufacture the compound parabolic concentrator, and $f_e$ which is a diametrical expansion factor of the compound parabolic concentrator allowing an overall diameter of the compound parabolic concentrator to be increased without increasing its height nor changing the shape of the inclined and symmetrical parabolic portions, with $\Delta d$ which is such that: $\Delta d = d_o(f_e - 1)$.

2. The compound parabolic concentrator according to claim 1, wherein the compound parabolic concentrator is a dielectric concentrator (28), the first refractive index $n_\alpha$ and the second refractive index $n_\beta$ being such that:

$$1 < n_\alpha < n_\beta \, .$$

3. The compound parabolic concentrator according to claim 1, wherein the compound parabolic concentrator is formed by an assembly of a hollow concentrator (19) and a collection lens comprising the collecting surface.

4. The compound parabolic concentrator according to any of the preceding claims, wherein the collecting surface is curved and defined by the following equation:

$$z_a = z_l(d_i/2) - \frac{cd_i^2}{4+2\sqrt{4-(K+1)c^2d_i^2}} - \frac{1}{4}\sum_{j=2}^{N}C_{2j}d_i^{2j} + \frac{cr^2}{1+\sqrt{1-(K+1)c^2r^2}} + \sum_{j=2}^{N}C_{2j}r^{2j} + t_e$$

where:

- $c$ is a curvature at the top of the collecting surface;
- $K$ is a conic constant, for example of value K = -(n$_\beta$/n$_\alpha$)²;
- the $C_{2j}$ are aspheric deformation coefficients;
- $d_i$ is a diameter of the collecting surface;
- $t_e$ = 0 if the compound parabolic concentrator is a dielectric concentrator (28), or $t_e$ is a thickness at the edge of the collection lens if the compound parabolic concentrator is formed by an assembly of a hollow concentrator (19) and a collection lens comprising the collecting surface.

5. The compound parabolic concentrator according to claim 4, wherein:

$$c = -\frac{1}{\left(\frac{n_\beta}{n_\alpha} - 1\right) t_a},$$

$t_a$ being a distance between the top of the collecting surface and a light source with which the optical signal receiving device is arranged to communicate.

6. The compound parabolic concentrator according to claim 3, wherein a back surface of the collection lens is defined by the following equation:

$$z_b = z_l(d_i/2) - \frac{c'd_i^2}{4 + 2\sqrt{4 - (K' + 1)c'^2 d_i^2}} - \frac{1}{4}\sum_{j=2}^{N} C'_{2j}\, d_i^{2j} + \frac{c'r^2}{1 + \sqrt{1 - (K' + 1)c'^2 r^2}} + \sum_{j=2}^{N} C'_{2j}\, r^{2j}$$

where:

- $c'$ is a curvature at the top;
- $K'$ is a conic constant;
- the $C'_{2j}$ are aspheric deformation coefficients;
- $z_l(d_i/2) = h$ is a height of the compound parabolic concentrator without the collecting surface;
- $d_i$ is a diameter of the collecting surface.

7. The compound parabolic concentrator according to any of the preceding claims, further comprising one or more antireflective or reflective layers applied to the side surface.

8. A device for receiving optical signals, comprising at least one optical assembly comprising a photodetector (7) and a compound parabolic concentrator (8) according to one of the preceding claims, the coupling surface (9) of which is positioned on the sensitive surface of the photodetector (7).

9. An optical wireless communication equipment, of access point (1) or user terminal type, comprising an optical signal receiving device according to claim 8.

10. A method for manufacturing a compound parabolic concentrator (8; 32) intended to be integrated into an optical signal receiving device used to implement optical wireless communication, the compound parabolic concentrator (8 ; 32) comprising a coupling surface (9, 24) to be positioned on a sensitive surface of a photodetector (7) of the receiving device, a collecting surface (10, 23) for receiving the optical signals, and a side surface (11) located between the coupling surface and the collecting surface, the side surface comprising two inclined and symmetrical parabolic portions when viewed in a cross-sectional plane passing through a reference axis of the compound parabolic concentrator, the side surface being defined by an equation using input parameters including a diameter $d_0$ of the sensitive surface of the photodetector, an acceptance angle $\alpha$, a first refractive index $n_\alpha$ of a medium wherein the compound parabolic concentrator is to be immersed, a second refractive index $n_\beta$ of a material used to manufacture the compound parabolic concentrator, and a diametrical expansion factor $f_e$ of the compound parabolic concentrator to increase an overall diameter of the compound parabolic concentrator without increasing its height nor changing the shape of the inclined and symmetrical parabolic portions, wherein the method comprises the following successive phases:

- a first phase comprising the step of defining the input parameters; and
- a second phase comprising the step of determining, from the input parameters, output parameters comprising an optimal diameter ($d_i$) of the collecting surface, an optimal height ($h$) of the compound parabolic concentrator, an equation for defining the side surface that uses the input parameters in the following form:

$$- \qquad z_l = \frac{\left(d_o\left(\frac{1}{2}+\frac{n_\beta}{n_\alpha\sin}\right)-\sqrt{\left(r-\frac{sign(r)\Delta d}{2}\right)^2}\right)\sqrt{n_\beta^2-n_\alpha^2\sin^2\alpha}}{n_\alpha\sin\alpha} \qquad -$$

$$\frac{n_\beta\sqrt{d_o(n_\beta+n_\alpha\sin\alpha)\left(n_\beta d_o-2n_\alpha\sin\alpha\left(r-\frac{sign(r)\Delta d}{2}\right)^2\right)}}{(n_\alpha\sin\alpha)^2},$$

with $\Delta d$ such that $\Delta d = d_o(f_e - 1)$, and a gain of the compound parabolic concentrator, the output parameters providing the compound parabolic concentrator with an optimal overall size for concentrating maximum radiant flux on the photodetector and optimizing its acceptance angle $\alpha$,

prior to the manufacture of the composite parabolic concentrator.

11. The manufacturing method according to claim 10, further comprising an intermediate phase, carried out after the second phase and before a third phase, and comprising the step of giving the collecting surface a curved shape, the third phase then comprising the steps of verifying that the optimal overall size of the compound parabolic concentrator is acceptable with respect to integration constraints into the receiving device, and validating the output parameters for manufacturing the compound parabolic concentrator if this is the case or proceeding to a fourth corrective phase prior to manufacturing if this is not the case.

12. The manufacturing method according to claim 11, wherein a hollow concentrator (19) is obtained at the end of the first phase and the second phase, and wherein the third phase comprises the step of defining a collection lens comprising the collecting surface and which is intended to be assembled with the hollow concentrator (19) to form the compound parabolic concentrator.

13. The manufacturing method according to claim 11 and 12, wherein the fourth corrective phase, implemented following the third phase in case that the optimal overall size is not acceptable, comprises a first correction step of changing the optimal diameter of the collecting surface and a diameter of the coupling surface of the compound parabolic concentrator but without changing the optimal height of the compound parabolic concentrator nor the shape of the inclined and symmetric parabolic portions, and/or a second correction step consisting of giving the hollow concentrator an effective height lower than the optimal height so as to obtain an acceptable overall size of the compound parabolic concentrator, and a third step consisting of repeating the second phase and the intermediate phase, if these are implemented, and then the third phase, until an acceptable effective overall size of the compound parabolic concentrator is obtained.

14. The manufacturing method according to any of claims 10 or 11, wherein a dielectric concentrator (28) is obtained after the first phase and the second phase.

15. The manufacturing method according to claims 11 and 14, wherein the fourth corrective step, implemented following the third step in case the optimal overall size is not acceptable, comprises a first correction step of changing a diameter of the collecting surface and the optimal diameter of the coupling surface of the compound parabolic concentrator but without changing the optimal height of the compound parabolic concentrator nor the shape of the inclined and symmetric parabolic portions, and/or a second correction step consisting of giving the dielectric concentrator an effective height lower than the optimal height so as to obtain an acceptable overall size of the compound parabolic concentrator and/or a third correction step consisting of increasing the second refractive index and reiterating the second phase and the intermediate phase, if the latter is implemented, then the third phase, until an acceptable overall size of the compound parabolic concentrator is obtained.

# *Figure 1*

*Figure 2*

*Figure 3*

*Figure 4*

Figure 5

Figure 6

Figure 7

Figure 8

Figure 9

Figure 10

*Figure 11*

*Figure 12*

*Figure 13*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5357101 A